# EUROPEAN PATENT APPLICATION

(11) **EP 4 376 231 A1**
(43) Date of publication of application: **29.05.2024**
(21) Application number: 22845146.4
(22) Date of filing: 06.07.2022
(51) Int. Cl.: H01R 13/639

(54) **ADAPTER, ELECTRICAL APPARATUS SYSTEM AND OPERATING METHOD THEREFOR**

(30) Priority: 23.07.2021 CN 202110837346
(71) Applicant: Positec Power Tools (Suzhou) Co., Ltd., Suzhou, Jiangsu 215123 (CN)
(72) Inventor: WANG, Liangjun, Suzhou, Jiangsu 215123 (CN); ZHOU, Yi, Suzhou, Jiangsu 215123 (CN); ZHANG, Shaohua, Suzhou, Jiangsu 215123 (CN); YUAN, Binbin, Suzhou, Jiangsu 215123 (CN)
(74) Representative: Kilburn & Strode LLP
(86) International application number: PCT/CN2022/104175
(87) International publication number: WO 2023/000981

(57) **Abstract**

The present invention relates to an adapter, configured to be adaptively connected to an electrical apparatus and a battery pack. The adapter includes a housing, a first locking portion, and a second locking portion. The first locking portion is movable relative to the housing between a first locking position at which the first locking portion is locked to the electrical apparatus and a first unlocking position at which the first locking portion is unlocked from the electrical apparatus, and the second locking portion is movable relative to the housing between a second locking position at which the second locking portion is locked to the battery pack and a second unlocking position at which the second locking portion is unlocked from the battery pack. In this way, the electrical apparatus interface and the battery pack interface can be flat, the size can be compact, thereby being convenient for a user to carry and use. The present invention further provides an electrical apparatus system including an electrical apparatus, a battery pack, and the adapter described above, and provides an operating method for an electrical apparatus system.

## Description

### CROSS-REFERENCE TO RELATED APPLICATIONS

This application claims priority to Chinese Patent Application No. 202110837346.7, filed on July 23, 2021, which is incorporated herein by reference in its entirety.

### Technical Field

The present invention relates to an adapter, an electrical apparatus system and an operating method therefor.

### Background

When an interface of an electric tool does not match an interface of a battery pack, an adapter is required to connect the electric tool and the battery pack. Two interfaces are provided on the adapter, one of which is configured to be connected and locked to the interface of the electric tool, and the other interface is configured to be connected and locked to the battery pack.

In the prior art, a tool locking portion is usually arranged on the adapter, where the tool locking portion is movable between a locking position at which the electric tool is locked to the adapter and an unlocking position at which the electric tool is unlocked from the adapter; and a battery pack locking portion is arranged on the battery pack, where the battery pack locking portion is movable between a locking position at which the battery pack is locked to the adapter and an unlocking position at which the battery pack is unlocked from the adapter. This will cause the battery pack interface to be not flat, the structure to be complex, and the size to be large, which is adverse to carrying and use by a user.

### SUMMARY

To overcome the defects in the prior art, the present invention provides an adapter and an electrical apparatus system that are simple in structure, compact in size, and convenient for a user to carry and use.

A technical solution adopted in the present invention to resolve the existing technical problems is as follows:
An adapter is provided, configured to be connected to an electrical apparatus and a battery pack, and including: a housing; and a first locking portion and a second locking portion, where the first locking portion is movable between a first locking position and a first unlocking position relative to the housing, when the first locking portion is located at the first locking position, the adapter is locked to the electrical apparatus, and when the first locking portion is located at the first unlocking position, the adapter is unlocked from the electrical apparatus; and the second locking portion is movable between a second locking position and a second unlocking position relative to the housing, when the second locking portion is located at the second locking position, the adapter is locked to the battery pack, and when the second locking portion is located at the second unlocking position, the adapter is unlocked from the battery pack.

The first locking portion configured to be locked to the electrical apparatus and the second locking portion configured to be locked to the battery pack are arranged on the adapter, which can make an electrical apparatus interface and a battery pack interface that are adaptively connected to the adapter be flat, the structure be simple, and the size be compact, thereby being convenient for a user to carry and use.

The present invention further provides an electrical apparatus system, including an electrical apparatus, a battery pack, and the adapter described above. By arranging a first locking portion locked to the electrical apparatus and a second locking portion locked to the battery pack on the adapter, an electrical apparatus interface and a battery pack interface in the electrical apparatus system are flat, the structure is simple, and the size is compact, thereby being convenient for a user to carry and use.

Optionally, the first locking portion moves from the first locking position to the first unlocking position in a first movement direction, the second locking portion moves from the second locking position to the second unlocking position in a second movement direction, and the first movement direction is opposite to the second movement direction.

Optionally, the first locking portion and the second locking portion respectively run through opposite surfaces of the housing.

Optionally, the first locking portion moves from the first locking position to the first unlocking position in a first movement direction, the second locking portion moves from the second locking position to the second unlocking position in a second movement direction, and the first movement direction is perpendicular to the second movement direction.

Optionally, the first locking portion and the second locking portion respectively run through mutually perpendicular surfaces of the housing.

Optionally, the first locking portion and the second locking portion comprise protrusions, when the first locking portion is at the first locking position or the second locking portion is at the second locking position, the protrusion protrudes from a surface of the housing, so as to be locked to the electrical apparatus or the battery pack, and when the first locking portion is at the first unlocking position or the second locking portion is at the second unlocking position, the protrusion retracts to the surface of the housing, so as to be separated from the electrical apparatus or the battery pack.

Optionally, further comprising an operating portion, wherein the operating portion drives the first locking portion to move from the first locking position to the first unlocking position, and the operating portion drives the second locking portion to move from the second locking position to the second unlocking position.

Optionally, the operating portion is capable of driving, in a first operating manner, the first locking portion to move from the first locking position to the first unlocking position; and the operating portion is further capable of driving, in a second operating manner different from the first operating manner, the second locking portion to move from the second locking position to the second unlocking position.

Optionally, the operating portion moves in a first unlocking direction relative to the housing in the first operating manner, and moves in a second unlocking direction relative to the housing in the second operating manner, and the first unlocking direction is opposite to the second unlocking direction.

Optionally, an unlocking direction of the operating portion is parallel to a direction in which the electrical apparatus or the battery pack is adaptively connected to the adapter.

Optionally, an unlocking direction of the operating portion is perpendicular to a movement direction of the first locking portion and/or a movement direction of the second locking portion.

Optionally, the operating portion comprises a finger touch portion for a user to operate, and the finger touch portion is arranged at an end of the housing in a direction in which the electrical apparatus or the battery pack is adaptively connected to the adapter.

Optionally, when the first locking portion is located at the first locking position and the second locking portion is located at the second locking position, the operating portion is located at an initial position, when the first locking portion is located at the first unlocking position, the operating portion is located at a first release position, when the second locking portion is located at the second unlocking position, the operating portion is located at a second release position, and the operating portion is capable of being reset from the first release position or the second release position to the initial position in a direction opposite to an unlocking direction.

Optionally, the initial position is located between the first release position and the second release position.

Optionally, the first release position is at least partially outside an outer contour of the housing, and the second release position is located inside the outer contour of the housing.

Optionally, the first locking portion moves from the first locking position to the first unlocking position in a first movement direction, and the second locking portion moves from the second locking position to the second unlocking position in a second movement direction; and the adapter further comprises a first limiting mechanism and a second limiting mechanism, wherein the first limiting mechanism is configured to limit movement of the first locking portion in the first movement direction, and the second limiting mechanism is configured to limit movement of the second locking portion in the second movement direction.

Optionally, the first limiting mechanism comprises a first limiting member arranged on the housing and a first guide member arranged at the first locking portion, the operating portion drives the first guide member to move relative to the first limiting member in the first movement direction; and/or the second limiting mechanism comprises a second limiting member arranged on the housing and a second guide member arranged at the second locking portion, and the operating portion drives the second guide member to move relative to the second limiting member in the second movement direction.

Optionally, the operating portion, the first locking portion, and the second locking portion all have magnetic regions, and when the first locking portion is located at the first locking position, a surface of the first locking portion close to the operating portion and a surface of the operating portion close to the first locking portion have a same magnetic pole; when the first locking portion is located at the first unlocking position, the surface of the first locking portion close to the operating portion and the surface of the operating portion close to the first locking portion have opposite magnetic poles; when the second locking portion is located at the second locking position, a surface of the second locking portion close to the operating portion and a surface of the operating portion close to the second locking portion have a same magnetic pole; and when the second locking portion is located at the second unlocking position, the surface of the second locking portion close to the operating portion and the surface of the operating portion close to the second locking portion have opposite magnetic poles.

Optionally, the operating portion drives, through a connecting member, the first locking portion and/or the second locking portion to move, one end of the connecting member is pivotably connected relative to the operating portion, and an other end of the connecting member is pivotably connected relative to the first locking portion and/or the second locking portion.

Optionally, the operating portion comprises a first operating portion configured to release locking between the adapter and the electrical apparatus, and a second operating portion configured to release locking between the adapter and the battery pack.

Optionally, the first operating portion is arranged at an end of the housing in a direction in which the electrical apparatus or the battery pack is adaptively connected to the adapter, and the second operating portion is arranged on two sides of the housing perpendicular to the direction in which the electrical apparatus or the battery pack is adaptively connected to the adapter.

Optionally, the first operating portion moves in a third unlocking direction, to drive the first locking portion to move from the first locking position to the first unlocking position; the second operating portion moves in a fourth unlocking direction, to drive the second locking portion to move from the second locking position to the second unlocking position; and the third unlocking direction is perpendicular to the fourth unlocking direction.

Optionally, both the first operating portion and the second operating portion are arranged on two sides of the housing perpendicular to a direction in which the electrical apparatus or the battery pack is adaptively connected to the adapter.

Optionally, the first operating portion moves in a third unlocking direction, to drive the first locking portion to move from the first locking position to the first unlocking position; the second operating portion moves in a fourth unlocking direction, to drive the second locking portion to move from the second locking position to the second unlocking position; and the third unlocking direction is parallel to the fourth unlocking direction.

Optionally, the first locking portion is driven by the electrical apparatus or the adapter to move from the first locking position to the first unlocking position, and the second locking portion is driven by the battery pack or the adapter to move from the second locking position to the second unlocking position.

Optionally, further comprising a reset portion, wherein the reset portion is configured to reset the first locking portion from the first unlocking position to the first locking position, and reset the second locking portion from the second unlocking position to the second locking position.

Optionally, the first locking portion and the second locking portion are stacked in the first movement direction, and the reset portion is arranged between the first locking portion and the second locking portion.

Optionally, the reset portion comprises a first reset portion and a second reset portion, wherein the first reset portion is configured to reset the first locking portion from the first unlocking position to the first locking position, and the second reset portion is configured to reset the second locking portion from the second unlocking position to the second locking position.

The invention further provides an electrical apparatus system, comprising an electrical apparatus, a battery pack, and the adapter as described above. By arranging the first locking portion locked with electrical apparatus and the second locking portion locked with battery pack on the adapter, the electrical apparatus interface and the battery pack interface in the electrical apparatus system are flat, simple in structure, small size, thereby facilitating the user carry and use.

Optionally, the electrical apparatus comprises an electrical apparatus locking portion configured to be adaptively connected and locked to the first locking portion, the battery pack comprises a battery pack locking portion configured to be adaptively connected and locked to the second locking portion, and both the electrical apparatus locking portion and the battery pack locking portion are provided as grooves.

Optionally, an operating method for an electrical apparatus system, wherein the electrical apparatus system comprises an adapter and an electrical apparatus and a battery pack that are capable of being respectively adaptively connected to the adapter, the adapter comprises a first locking portion, a second locking portion, and an operating portion, wherein the first locking portion is capable of being driven by the operating portion to move between a first locking position at which the first locking portion is locked to the electrical apparatus and a first unlocking position at which the first locking portion is unlocked from the electrical apparatus, and the second locking portion is capable of being driven by the operating portion to move between a second locking position at which the second locking portion is locked to the battery pack and a second unlocking position at which the second locking portion is unlocked from the battery pack, wherein the operating method comprises the following steps: driving, in a state in which the adapter is adaptively connected and locked to the electrical apparatus, the operating portion in a first operating manner to move the first locking portion from the first locking position to the first unlocking position, so as to unlock the adapter from the electrical apparatus; and driving, in a state in which the adapter is adaptively connected and locked to the battery pack, the operating portion in a second operating manner to move the second locking portion from the second locking position to the second unlocking position, so as to unlock the adapter from the battery pack.

By setting arranging an operating portion on the adapter, and unlocking the adapter from the electrical apparatus and unlocking the adapter from the battery pack in a first operating manner and a second operating manner respectively, the user can perform unlocking with a single hand, making the operation convenient.

Optionally, the first operating manner is set as moving in a first unlocking direction, the second operating manner is set as moving in a second unlocking direction, and the first unlocking direction is opposite to the second unlocking direction.

Optionally, both the first unlocking direction and the second unlocking direction are parallel to a direction in which the electrical apparatus or the battery pack is adaptively connected to the adapter.

### BRIEF DESCRIPTION OF THE DRAWINGS

The foregoing objects, technical solutions, and beneficial effects of the present invention can be implemented with reference to the accompanying drawings below:
FIG. 1 is a schematic diagram of an electrical apparatus system according to Embodiment 1 of the present invention;
FIG. 2 is a schematic diagram of an adapter in FIG. 1 with a lower housing removed;
FIG. 3 is a schematic diagram of an adapter in FIG. 1;
FIG. 4 is a schematic diagram of an adaptive connection process of a battery pack and an adapter in FIG. 1;
FIG. 5 is a schematic diagram of an adaptive connection process of a battery pack, an adapter, and an electrical apparatus in FIG. 1;
FIG. 6 is a schematic diagram of completed adaptive connection of a battery pack, an adapter, and an electrical apparatus in FIG. 1;
FIG. 7 to FIG. 9 are schematic diagrams of states of components when an operating portion of an adapter in FIG. 1 is located at different positions;
FIG. 10 is a schematic diagram of an adapter in FIG. 1 with an upper housing removed;
FIG. 11 is a schematic diagram of a lower housing of an adapter in FIG. 1;
FIG. 12 is a schematic diagram of an operating portion of an adapter in FIG. 1;
FIG. 13 is a schematic diagram of a first locking portion of an adapter in FIG. 1;
FIG. 14 is a schematic diagram of a connecting member of an adapter in FIG. 1;
FIG. 15 is a schematic diagram of a second locking portion of an adapter in FIG. 1;
FIG. 16 is a schematic diagram of a connecting member of an adapter in another implementation;
FIG. 17 is a schematic diagram of a first locking portion of an adapter in FIG. 16;
FIG. 18 is a cross-sectional view of an adapter according to Embodiment 2 of the present invention;
FIG. 19 is a schematic diagram of an operating portion of an adapter in FIG. 18;
FIG. 20 is a schematic diagram of a first locking portion of an adapter in FIG. 18;
FIG. 21 is a schematic diagram of a second locking portion of an adapter in FIG. 18;
FIG. 22 is a cross-sectional view of an adapter according to Embodiment 3 of the present invention;
FIG. 23 is a schematic diagram of the adapter in FIG. 22 with a lower housing removed;
FIG. 24 and FIG. 25 are schematic diagrams of a first locking portion of the adapter in FIG. 22 from different angles;
FIG. 26 is a schematic diagram of a second locking portion of the adapter in FIG. 22;
FIG. 27 is a schematic diagram of an operating portion of the adapter in FIG. 22;
FIG. 28 to FIG. 30 are schematic diagrams of states of components when an operating portion of an adapter in Embodiment 4 of the present invention is located at different positions;
FIG. 31 is a schematic diagram of states of the operating portion, a first locking portion, and a second locking portion in the adapter in FIG. 28;
FIG. 32 is a schematic diagram of states of an operating portion, a first locking portion, and a second locking portion in an adapter according to Embodiment 5 of the present invention;
FIG. 33 to FIG. 38 are schematic diagrams of states of components when an operating portion of an adapter in FIG. 32 is located at different positions;
FIG. 39 is a schematic diagram of an adapter according to Embodiment 6 of the present invention;
FIG. 40 to FIG. 42 are schematic diagrams of adaptive connection between the adapter in FIG. 39 and a battery pack when an operating portion of the adapter is located at different positions;
FIG. 43 is a schematic diagram of an adapter according to Embodiment 7 of the present invention;
FIG. 44 is a schematic diagram of the adapter in FIG. 43 with an upper housing removed;
FIG. 45 and FIG. 46 are schematic diagrams of adaptive connection between the adapter in FIG. 43 and an electrical apparatus when a first operating portion of the adapter is located at different positions;
FIG. 47 to FIG. 50 are schematic diagrams of adaptive connection between the adapter in FIG. 43 and a battery pack when a second operating portion of the adapter is located at different positions;
FIG. 51 is a schematic diagram of an adapter according to Embodiment 8 of the present invention;
FIG. 52 and FIG. 53 are schematic diagrams when a first operating portion of the adapter in FIG. 51 is located at different positions; and
FIG. 54 and FIG. 55 are schematic diagrams when a second operating portion of the adapter in FIG. 51 is located at different positions.

### DETAILED DESCRIPTION

### Embodiment 1

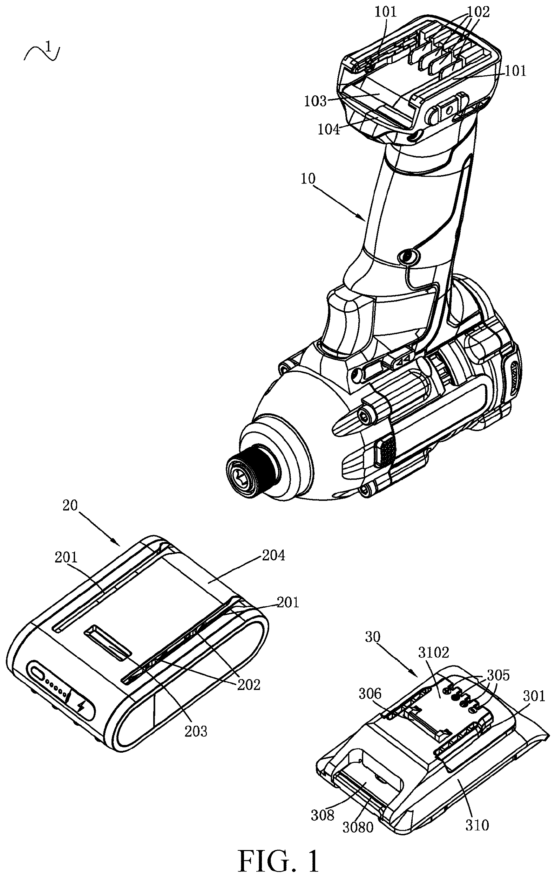

As shown in FIG. 1, an electrical apparatus system 1 includes an electrical apparatus 10, a battery pack 20, and an adapter 30. The electrical apparatus 10 may be an electric tool, a household appliance, or a charger.

The electrical apparatus 10 includes an electrical apparatus interface. The electrical apparatus interface is configured to be slidably adaptively connected to the adapter 30 in an adaptive connection direction. The electrical apparatus interface includes a pair of electrical apparatus guide rails 101 extending in the adaptive connection direction and a plurality of electrical apparatus terminals 102 arranged between the pair of electrical apparatus guide rails 101. The electrical apparatus guide rails 101 are configured to guide the electrical apparatus 10 to be slidably adaptively connected to the adapter 30, and the electrical apparatus terminals 102 are configured to realize electrical connection between the electrical apparatus 10 and the adapter 30. The electrical apparatus 10 further includes an electrical apparatus locking portion 103 configured to be locked to the adapter 30. In this embodiment, the electrical apparatus locking portion 103 is provided as a groove, located at an adaptive connection starting end of the electrical apparatus interface, and arranged between the pair of electrical apparatus guide rails 101. The adaptive connection starting end of the electrical apparatus interface refers to an end of the electrical apparatus interface that is first in contact with the adapter 30 when the electrical apparatus interface is adaptively connected to the adapter 30.

The battery pack 20 includes a battery pack interface. The battery pack interface is configured to be adaptively connected to the adapter 30 in the adaptive connection direction. The battery pack interface includes a pair of battery pack guide rails 201 extending in the adaptive connection direction and a plurality of battery pack terminals 202. The battery pack guide rails 201 are configured to guide the battery pack 20 to be slidably adaptively connected to the adapter 30, and the battery pack terminals 202 are configured to realize electrical connection between the battery pack 20 and the adapter 30. Optionally, the battery pack terminals 202 are arranged inside side walls of the battery pack guide rails 201. The battery pack 20 further includes a battery pack locking portion 203 configured to be locked to the adapter 30, In this embodiment, the battery pack locking portion 203 is provided as a groove, located at an adaptive connection tail end of the battery pack interface, and arranged between the pair of battery pack guide rails 201. The adaptive connection tail end of the battery pack interface refers to an end of the battery pack interface that is finally in contact with the adapter 30 when the battery pack interface is adaptively connected to the adapter 30.

In this embodiment, the electrical apparatus interface and the battery pack interface do not match each other and cannot be directly adaptively connected, and the adapter 30 needs to be used to connect the electrical apparatus 10 and the battery pack 20 respectively to realize the electrical connection between the electrical apparatus 10 and the battery pack 20. The adapter 30 includes a first interface configured to be adaptively connected to the electrical apparatus 10 and a second interface configured to be adaptively connected to the battery pack 20. The first interface includes a pair of first guide rails 301 configured to be slidably adaptively connected to the electrical apparatus guide rails 101 and a plurality of first terminals 302 configured to be electrically connected to the electrical apparatus terminals 102. The second interface includes a pair of second guide rails 303 configured to be slidably adaptively connected to the battery pack guide rails 201 and a plurality of second terminals 304 configured to be electrically connected to the battery pack terminals 202. In this embodiment, the first terminals 302 are arranged between the pair of first guide rails 301, and the second terminals 304 are embedded inside side walls of the second guide rails 303.

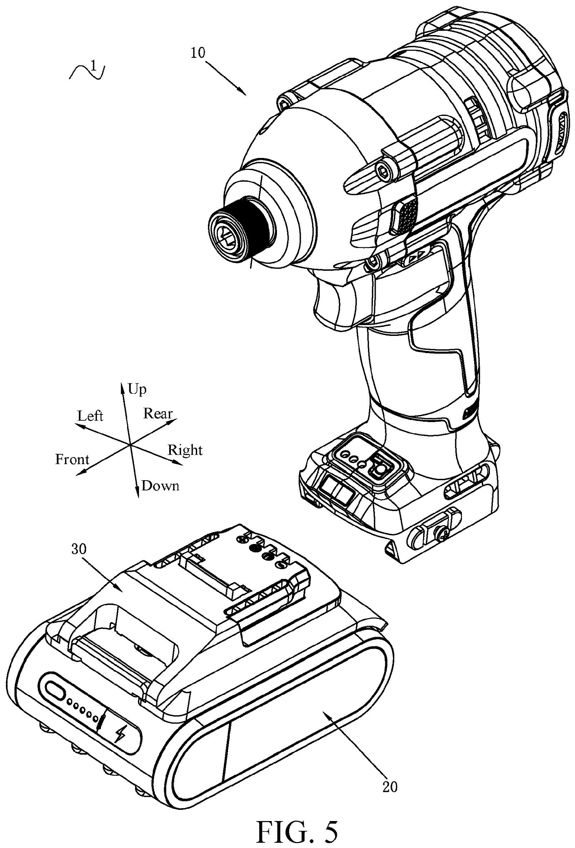

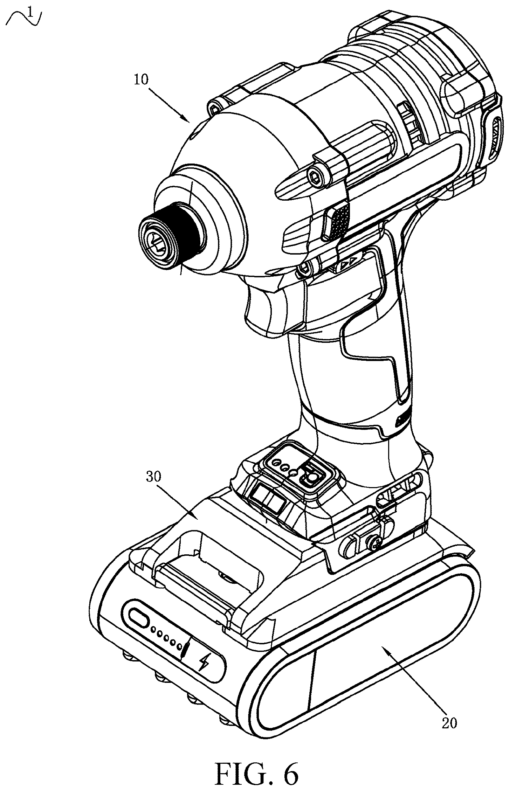

As shown in FIG. 5 and FIG. 6, when the adapter 30 is adaptively connected to the electrical apparatus 10, a direction in which the electrical apparatus 10 is viewed from the adapter 30 is defined as up, and a direction opposite to up is defined as down; when the adapter 30 is adaptively connected to the electrical apparatus 10, a direction in which the adapter 30 moves relative to the electrical apparatus 10 is defined as rear, and a direction in which the electrical apparatus 10 moves relative to the adapter 30 is defined as front; and when the adapter 30 is detached from the electrical apparatus 10, a direction in which the adapter 30 moves relative to the electrical apparatus 10 is defined as front, and a direction in which the electrical apparatus 10 moves relative to the adapter 30 is defined as rear. A direction perpendicular to both the front-rear direction and the up-down direction is defined as a left-right direction. In this application, an adaptive connection direction in which the adapter 30 moves relative to the electrical apparatus 10 or the electrical apparatus 10 moves relative to the adapter 30 is the front-rear direction.

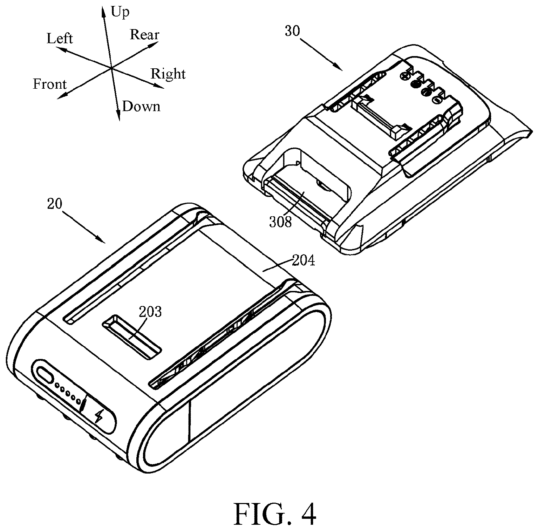

The adapter 30 includes a housing. The first interface is at least partially located at an upper end of the housing, and the second interface is at least partially located at a lower end of the housing. In this embodiment, the housing includes an upper housing 310 and a lower housing 311 connected to the upper housing 310. The upper housing 310 includes a plurality of terminal receiving holes 305, and each first terminal 302 is received in each terminal receiving hole 305. As shown in FIG. 4 to FIG. 6, when the adapter 30 is adaptively connected to the electrical apparatus 10, the electrical apparatus terminals 102 extend into the terminal receiving holes 305 and are adaptively connected to the first terminals 302, and the adapter 30 is located below the electrical apparatus 10. When the adapter 30 is adaptively connected to the battery pack 20, the battery pack terminals 202 are press-fitted with the second terminals 304 to achieve electrical connection, and the adapter 30 is located above the battery pack 20.

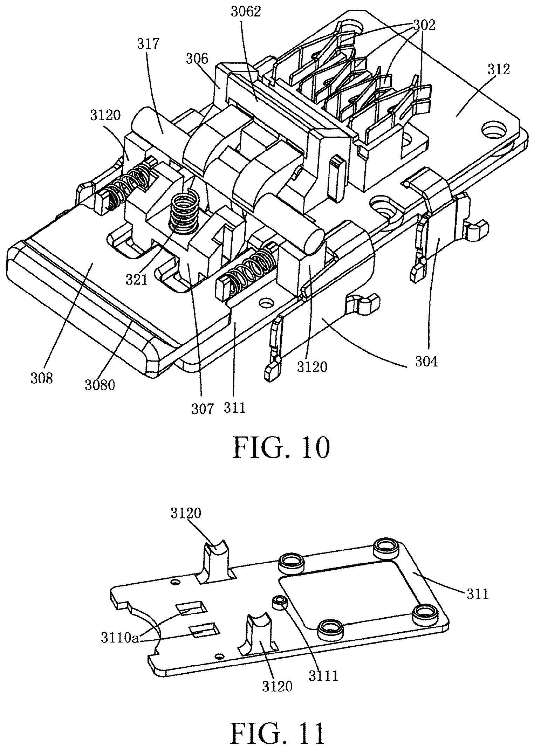

As shown in FIG. 10, the adapter 30 includes a circuit board 312. The circuit board 312 is mounted on the lower housing 311. Both the first terminals 302 and the second terminals 304 are electrically connected to the circuit board 312.

The adapter 30 further includes a first locking portion 306 and a second locking portion 307. The first locking portion 306 has, relative to the housing, a first locking position at which the first locking portion 306 is locked to the electrical apparatus 10 and a first unlocking position at which the first locking portion 306 is unlocked from the electrical apparatus 10. The second locking portion 307 has, relative to the housing, a second locking position at which the second locking portion 307 is locked to the battery pack 20 and a second unlocking position at which the second locking portion 307 is unlocked from the battery pack 20. The first locking portion 306 is movable between the first locking position and the first unlocking position, and the second locking portion 307 is movable between the second locking position and the second unlocking position.

The adapter 30 includes the first locking portion 306 configured to be locked to the electrical apparatus 10 and the second locking portion 307 configured to be locked to the battery pack 20, which can make the electrical apparatus interface and the battery pack interface that are adaptively connected to the adapter 30 be flat, the structure be simple, and the size be compact, thereby being convenient for a user to carry and use.

Further, the first locking portion 306 moves from the first locking position to the first unlocking position in a first movement direction B 1, the second locking portion 307 moves from the second locking position to the second unlocking position in a second movement direction B2, and the first movement direction B 1 is opposite to the second movement direction B2. In this embodiment, both the first movement direction B1 and the second movement direction B2 are perpendicular to the adaptive connection direction (where the adaptive connection direction is the front-rear direction) of the electrical apparatus 10 or the battery pack 20 and the adapter 30, the first movement direction B 1 is set to be the downward direction in the up-down direction, and the second movement direction B2 is set to the upward direction in the up-down direction. In this way, the movement directions of the first locking portion 306 and the second locking portion 307 do not interfere with each other, thereby ensuring smooth unlocking between the adapter 30 and the electrical apparatus 10 or the battery pack 20.

Further, the first locking portion 306 and the second locking portion 307 respectively run through opposite surfaces of the housing. The housing includes a first surface 3102 and a second surface 3110 that are opposite to each other. In this embodiment, the first surface 3102 is provided as an upper surface on the upper housing 310, and the second surface 3110 is provided as a lower surface on the lower housing 314. The first surface 3102 is provided with an upper lock groove 3102a. The first locking portion 306 runs through the upper lock groove 3102a. The second surface 3110 is provided with a lower lock groove 3110a. The second locking portion 307 runs through the lower lock groove 3110a.

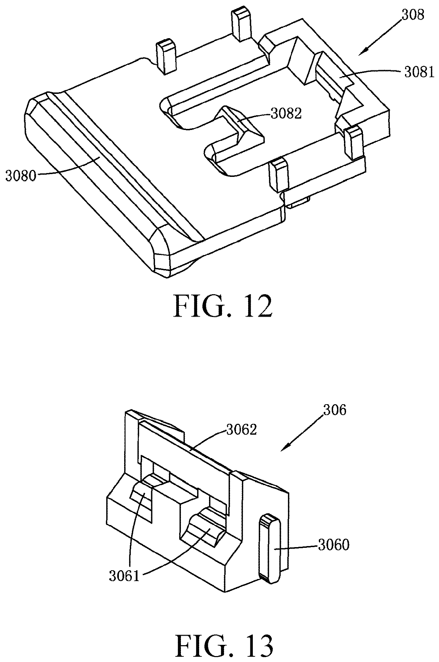

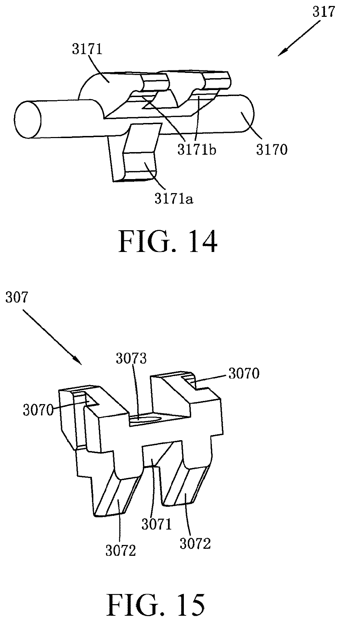

As shown in FIG. 13, the first locking portion 306 includes a first lock bolt 3062 configured to cooperate with the electrical apparatus locking portion 103. When the electrical apparatus 10 is locked and connected to the adapter 30, the first lock bolt 3062 cooperates with and is connected to the electrical apparatus locking portion 103. As shown in FIG. 15, the second locking portion 307 includes a second lock bolt 3072 configured to cooperate with the battery pack locking portion 203. When the battery pack 20 is locked and connected to the adapter 30, the second lock bolt 3072 cooperates with and is connected to the battery pack locking portion 203.

In this embodiment, both the first lock bolt 3062 and the second lock bolt 3072 are arranged as protrusions. When the first locking portion 306 is at the first locking position, the first lock bolt 3062 extends out from the upper lock groove 3102a and protrudes from the first surface 3102; when the first locking portion 306 is at the first unlocking position, the first lock bolt 3062 retracts from the upper lock groove 3102a to the first surface 3102; and when the second locking portion 307 is at the second locking position, the second lock bolt 3072 extends out from the lower lock groove 3110a and protrudes from the second surface 3110; and when the second locking portion 307 is at the second unlocking position, the second lock bolt 3072 retracts from the lower lock groove 3110a to the second surface 3110. The first lock bolt 3062 and the second lock bolt 3072 each have at least one bevel for pressing against the electrical apparatus locking portion 103 and the battery pack locking portion 203, to ensure that the adapter 30 is reliably locked to the electrical apparatus 10 and the battery pack 20.

Further, the adapter further includes an operating portion 308, where the operating portion 308 drives the first locking portion 306 to move from the first locking position to the first unlocking position, and the operating portion 308 drives the second locking portion 307 to move from the second locking position to the second unlocking position. The operating portion 308 includes a finger touch portion 3080 for a user to operate. The finger touch portion 3080 is arranged at one end of the housing. The one end of the housing refers to an end of the housing in the front-rear direction. This arrangement can facilitate the user's operation with a single hand, and conforms to ergonomics. Optionally, the operating portion 308 is arranged as a push button, and the finger touch portion 3080 is arranged to be hookshaped. The user can hook the finger touch portion 3080 with a finger, so as to move the operating portion 308.

The operating portion 308 is capable of driving, in a first operating manner, the first locking portion 306 to move from the first locking position to the first unlocking position; and the operating portion 308 is further capable of driving, in a second operating manner different from the first operating manner, the second locking portion 307 to move from the second locking position to the second unlocking position.

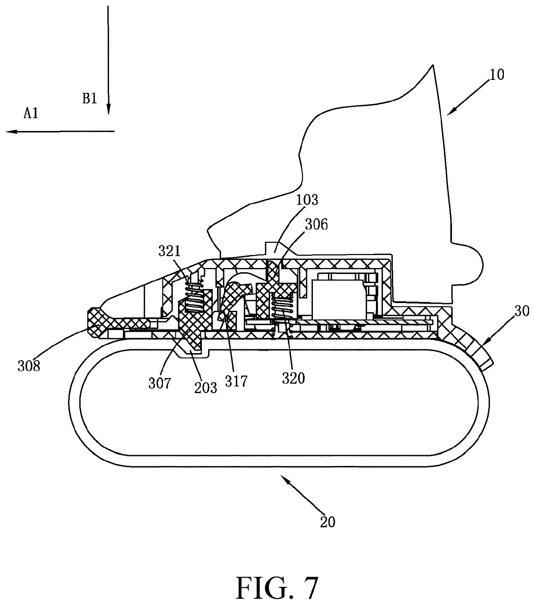

In this embodiment, as shown in FIG. 7 to FIG. 9, the operating portion 308 moves in a first unlocking direction A1 relative to the housing in the first operating manner, and moves in a second unlocking direction A2 relative to the housing in the second operating manner, and the first unlocking direction A1 is opposite to the second unlocking direction A2. An unlocking direction of the operating portion 308 is perpendicular to a movement direction of the first locking portion 306 or the second locking portion 307, and the unlocking direction of the operating portion 308 is parallel to an adaptive connection direction (where the adaptive connection direction is the front-rear direction) of the electrical apparatus 10 or the battery pack 20 and the adapter 30. The operating portion 308 moves in the first unlocking direction A1, to drive the first locking portion 306 to move from the first locking position to the first unlocking position in the first movement direction B 1; and the operating portion 308 moves in the second unlocking direction A2, to drive the second locking portion 307 to move from the second locking position to the second unlocking position in the second movement direction B2. In other implementations, the first unlocking direction A1 and the second unlocking direction A2 may alternatively be the same direction. For example, the operating portion 308 moves in the same direction with different strokes to unlock the electrical apparatus and the battery pack respectively. In this embodiment, the first unlocking direction A1 is set to the front direction in the front-rear direction, and the second unlocking direction A2 is set to the rear direction in the front-rear direction.

By arranging an operating portion 308 for unlocking in different operating manners, the user can perform unlocking with a single hand, and the operation is convenient. In addition, the operating portion 308 moves in different directions to respectively drive the first locking portion 306 and the second locking portion 307 to move, thereby unlocking the adapter 30 from the electrical apparatus 10 and the battery pack 20. The adapter has a simple structure and is convenient for the user to operate. In addition, the unlocking direction of the operating portion 308 corresponds to a removal direction of an unlocked object, which conforms to ergonomics and facilitates operation.

The unlocking direction of the operating portion 308 is perpendicular to the movement direction of the first locking portion 306 or the second locking portion 307, so that a stroke for which the operating portion 308 controls the first locking portion 306 or the second locking portion 307 to move is relatively short, and the size of the adapter 30 is compact.

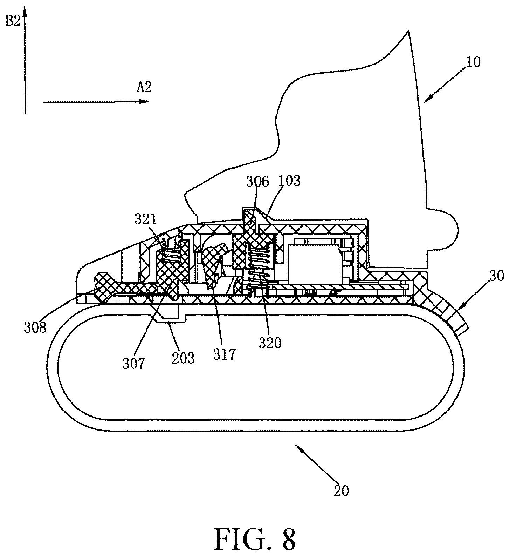

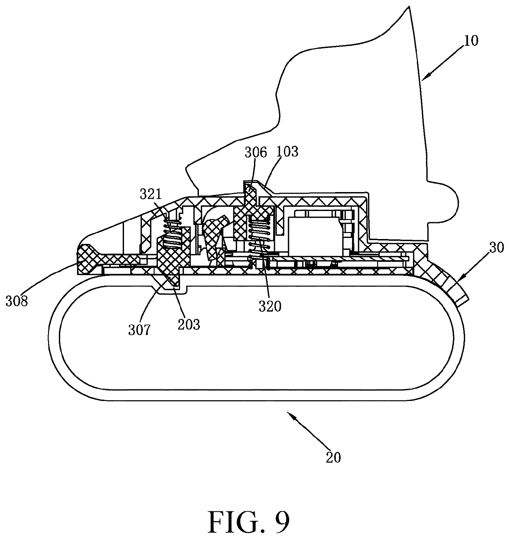

As shown in FIG. 9, when the first locking portion 306 is located at the first locking position and the second locking portion 307 is located at the second locking position, the operating portion 308 is located at an initial position. As shown in FIG. 7, in this case, the first locking portion 306 is located at the first unlocking position, and the operating portion 308 is located at a first release position. As shown in FIG. 8, in this case, the second locking portion 307 is located at the second unlocking position, the operating portion 308 is located at a second release position, the operating portion 308 can be reset from the first release position to the initial position in a direction opposite to the first unlocking direction A1, and the operating portion 308 can be reset from the second release position to the initial position in a direction opposite to the second unlocking direction A2. The initial position is located between the first release position and the second release position. The first release position is at least partially outside an outer contour of the housing, and the second release position is located inside the outer contour of the housing. This arrangement can achieve a proper layout of the adapter and reduce the size of the adapter, and also conforms to the user's operating habits and facilitates operation. Optionally, the initial position is set as that an outermost boundary of the operating portion 308 away from the housing is flush with an outermost boundary of the upper housing 310 of the adapter close to the operating portion 308.

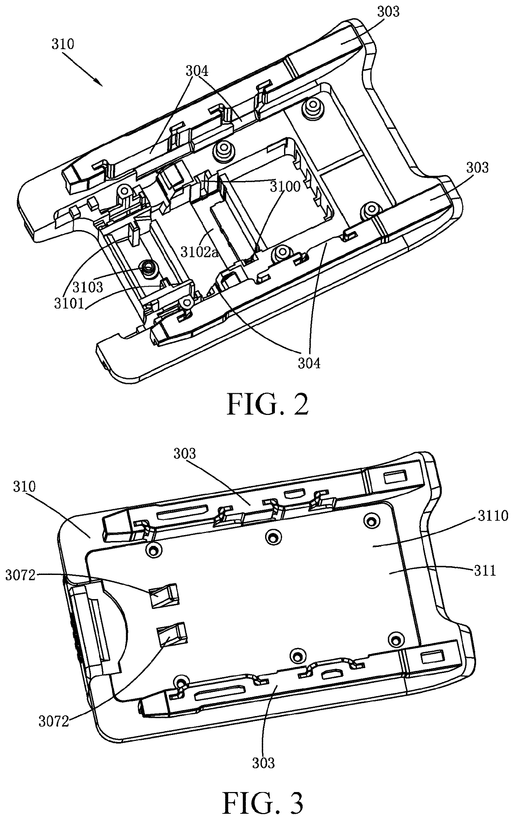

The adapter 30 further includes a first limiting mechanism and a second limiting mechanism, where the first limiting mechanism is configured to limit movement of the first locking portion 306 in the first movement direction B1, and the second limiting mechanism is configured to limit movement of the second locking portion 307 in the second movement direction B2. In this embodiment, as shown in FIG. 2 and FIG. 13, the first limiting mechanism includes a first limiting member 3100 arranged on the upper housing 310 and a first guide member 3060 arranged at the first locking portion 306, and the operating portion 308 drives the first guide member 3060 to move relative to the first limiting member 3100 in the first movement direction B1. As shown in FIG. 2 and FIG. 15, the second limiting mechanism includes a second limiting member 3101 arranged on the housing and a second guide member 3070 arranged at the second locking portion 307, and the operating portion 308 drives the second guide member 3070 to move relative to the second limiting member 3101 in the second movement direction B2. In this embodiment, the first guide member 3060 is arranged as a protrusion respectively located on two sides of the first locking portion 306 and extending in the up-down direction. The first limiting member 3100 is arranged as a groove located on the upper housing 310 and matching the first guide member 3060. The second guide member 3070 is provided as a groove respectively located on two sides of the second locking member 307 and extending in the up-down direction. The second limiting member 3101 is arranged as a protrusion located on the upper housing 310 and matching the second guide member 3070.

The operating portion 308 drives, through a connecting member 317, the first locking portion 306 and/or the second locking portion 307 to move, one end of the connecting member 317 is pivotably connected relative to the operating portion 308, and an other end of the connecting member 317 is pivotably connected relative to the first locking portion 306 and/or the second locking portion 307. In this embodiment, the operating portion 308 drives, through the connecting member 317, the first locking portion 306 to move, one end of the connecting member 317 is pivotably connected relative to the operating portion 308, and an other end of the connecting member 317 is pivotably connected relative to the first locking portion 306. As shown in FIG. 10 and FIG. 14, the second locking portion 307, the connecting member 317, and the first locking portion 306 are sequentially arranged in the second unlocking direction A2. The connecting member 317 includes a connecting shaft 3170 and a pivoting body 3171 integrally formed with the connecting shaft 3170. Two ends of the connecting shaft 3170 are respectively erected on the convex columns 3120 of the circuit board 312. The pivoting body 3171 includes a first abutting surface 3171a pivotably connected to the operating portion 308 and a second abutting surface 3171b pivotably connected to the first locking portion 306. Correspondingly, the operating portion 308 is provided with a first pressing surface 3081 that cooperates with the first abutting surface 3171a, and the first locking portion 306 is provided with a second pressing surface 3061 that cooperates with the first abutting surface 3171b. When the operating portion 308 moves in the first unlocking direction A1, the second pressing surface 3081 drives the first abutting surface 3171a and the first abutting surface 3171b to pivot, and then the second abutting surface 3171b drives the second pressing surface 3061, so as to drive the first locking portion 306 to move. In addition, due to the action of the first limiting mechanism, the first locking portion 306 moves in the first movement direction B1. Optionally, two first abutting surface 3171b and two second pressing surfaces 3061 are provided, to make the connection between the connecting member 317 and the first locking portion 306 more stable.

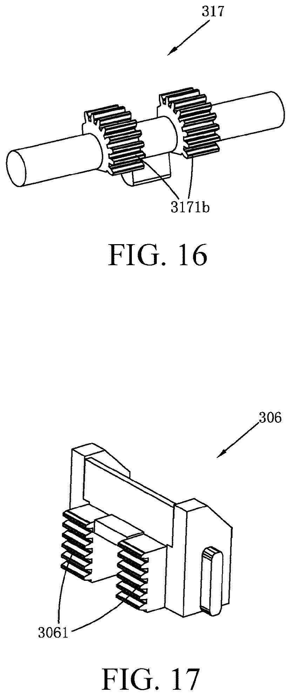

In this embodiment, both the first abutting surface 3171a and the second abutting surface 3171b are provided as curved surfaces, and the first pressing surface 3081 and the second pressing surface 3061 that match the first abutting surface 3171a and the second abutting surface 3171b are also provided as curved surfaces. In an alternative solution, as shown in FIG. 16 and FIG. 17, both the second abutting surface 3171b and the second pressing surface 3061 are provided as gear surfaces.

As shown in FIG. 12, the operating portion 308 is further provided with a third pressing surface 3082. Correspondingly, the second locking portion 307 is provided with a third abutting surface 3071 that cooperates with the third pressing surface 3082. When the operating portion 308 moves in the second unlocking direction A2, the third pressing surface 3082 drives the third abutting surface 3071, so as to drive the second locking portion 307 to move. In addition, due to the action of the second limiting mechanism, the second locking portion 307 moves in the second movement direction B2. In this embodiment, the third abutting surface 3071 is provided as a bevel, and the third pressing surface 3082 is provided as a curved surface.

The adapter 30 further includes a reset portion, where the reset portion is configured to reset the first locking portion 306 from the first unlocking position to the first locking position, and reset the second locking portion 307 from the second unlocking position to the second locking position. By providing the reset portion, the first locking portion 306 and the second locking portion 307 are automatically reset after completion of an unlocking action. In this embodiment, the reset portion includes a first reset portion 320 and a second reset portion 321, where the first reset portion 320 is configured to reset the first locking portion 306 from the first unlocking position to the first locking position, and the second reset portion 321 is configured to reset the second locking portion 307 from the second unlocking position to the second locking position. As shown in FIG. 9, FIG. 10, FIG. 11, and FIG. 15, the first reset portion 320 is arranged between the lower housing 311 and the first locking portion 306. A first convex column (not shown) is arranged on a bottom surface of the first locking portion 306 close to the lower housing 311, and a second convex column 3111 is arranged on a top surface of the lower housing 311 close to the first locking portion 306. One end of the first reset portion 320 is sleeved on the first convex column, and an other end thereof is sleeved on the second convex column 3111. The second reset portion 321 is arranged between the upper housing 310 and the second locking portion 307. A groove 3073 is provided on a top surface of the second locking portion 307 close to the upper housing 310, and a third convex column 3103 is arranged on a bottom surface of the upper housing 310 close to the second locking portion 307. One end of the second reset portion 321 is sleeved on the third convex column 3103, and an other end thereof is inserted into the groove 3073. Optionally, both the first reset portion 320 and the second reset portion 321 are arranged as springs.

The reset portion can be further configured to reset the operating portion 308 from the first release position to the initial position in a direction opposite to the first unlocking direction A1, and reset the operating portion 308 from the second release position to the initial position in a direction opposite to the second unlocking direction A2. In this embodiment, the first reset portion 320 is configured to reset the operating portion 308 from the first release position to the initial position in the direction opposite to the first unlocking direction A1, and the second reset portion 321 is configured to reset the operating portion 308 from the second release position to the initial position in the direction opposite to the second unlocking direction A2. An example in which the operating portion 308 is reset from the first release position to the initial position is used. When the first locking portion 306 is reset from the first unlocking position to the first locking position due to the action of the first reset portion 320, the second pressing surface 3061 drives the second abutting surface 3171b to move, and then the first abutting surface 3171a drives the first pressing surface 3081 to move, so that the operating portion 308 is reset from the first release position to the initial position in the direction opposite to the first unlocking direction A1.

As shown in FIG. 1, the electrical apparatus 10 further includes an electrical apparatus pressing portion 104, and the battery pack 20 further includes a battery pack pressing portion 204. The electrical apparatus pressing portion 104 is arranged at the adaptive connection starting end of the electrical apparatus interface, and the battery pack pressing portion 204 is arranged at an adaptive connection starting end of the battery pack interface. When the electrical apparatus 10 is adaptively connected to the adapter 30, the electrical apparatus pressing portion 104 can press against the first lock bolt 3062, so that the first locking portion 306 moves from the first locking position to the first unlocking position in the first movement direction B1. When the battery pack 20 is adaptively connected to the adapter 30, the battery pack pressing portion 204 can press against the second lock bolt 3072, so that the second locking portion 307 moves from the second locking position to the second unlocking position in the second movement direction B2. Optionally, the electrical apparatus pressing portion 104 is arranged as a bevel, and the battery pack pressing portion 204 is arranged as a curved surface.

The following describes the adaptive connection and unlocking process of the electrical apparatus 10 and the adapter 30.

As shown in FIG. 8, the electrical apparatus 10 and the adapter 30 have been adaptively connected and locked. In this case, the first locking portion 306 is located at the first locking position, and the first lock bolt 3062 cooperates with the electrical apparatus locking portion 103. When the operating portion 308 is moved in the first unlocking direction A1, a second bevel 3081 drives a first bevel 3171a and a first slope 3171b to pivot, and then the first slope 3171b drives a second slope 3061. In addition, due to the action of the first limiting mechanism, the first locking portion 306 moves from the first locking position to the first unlocking position in the first movement direction B1. As shown in FIG. 7, the first lock bolt 3062 is disengaged from the electrical apparatus locking portion 103. In this case, the adapter 30 is moved in the first unlocking direction A1 or the electrical apparatus 10 is moved in the direction opposite to the first unlocking direction A1, so that after the first guide rail 301 is disengaged from the electrical apparatus guide rail 101, the adaptive connection between the electrical apparatus 10 and the adapter 30 can be released.

If the electrical apparatus 10 is adaptively connected to the adapter 30, it is necessary to first move the electrical apparatus 10 toward the front in the front-rear direction (that is, the first unlocking direction A1) or move the adapter 30 toward the rear in the front-rear direction (that is, the second unlocking direction A2), so that the electrical apparatus guide rail 101 is slidably adaptively connected to the first guide rail 301. When the electrical apparatus pressing portion 104 presses against the first lock bolt 3062, the first locking portion 306 moves from the first locking position to the first unlocking position in the first movement direction B1, to prevent interference between the first locking portion 306 and the electrical apparatus interface. When the electrical apparatus guide rail 101 and the first guide rail 301 are adaptively connected in place, due to the action of the first reset portion 320, the first locking portion 306 is reset from the first unlocking position to the first locking position, and the first lock bolt 3062 cooperates with the electrical apparatus locking portion 103, thereby realizing adaptive connection between the adapter 30 and the electrical apparatus 10.

The following describes the adaptive connection and unlocking process of the battery pack 20 and the adapter 30.

As shown in FIG. 9, the battery pack 20 and the adapter 30 have been adaptively connected and locked. In this case, the second locking portion 307 is located at the second locking position, and the second lock bolt 3072 cooperates with the battery pack locking portion 203. When the operating portion 308 is moved in the second unlocking direction A2, a third bevel 3082 drives a third slope 3071, and due to the action of the second limiting mechanism, the second locking portion 307 moves from the second locking position to the second unlocking position in the second movement direction B2. As shown in FIG. 8, the second lock bolt 3072 is disengaged from the battery pack locking portion 203. In this case, the adapter 30 is moved in the second unlocking direction A2 or the battery pack 20 is moved in the direction opposite to the second unlocking direction A2, so that after the second guide rail 302 is disengaged from the battery pack guide rail 201, the adaptive connection between the battery pack 20 and the adapter 30 can be released.

If the battery pack 20 is adaptively connected to the adapter 30, it is necessary to first move the battery pack 20 toward the rear in the front-rear direction (that is, the second unlocking direction A2) or move the adapter 30 toward the front in the front-rear direction (that is, the first unlocking direction A1), so that the battery pack guide rail 201 is slidably adaptively connected to the second guide rail 302. When the battery pack pressing portion 204 presses against the second lock bolt 3072, the second locking portion 307 moves from the second locking position to the second unlocking position in the second movement direction B2, to prevent interference between the second locking portion 307 and the battery pack interface. When the battery pack guide rail 201 and the second guide rail 303 are adaptively connected in place, due to the action of the second reset portion 321, the second locking portion 307 is reset from the second unlocking position to the second locking position, and the second lock bolt 3072 cooperates with the battery pack locking portion 203, thereby realizing adaptive connection between the adapter 30 and the battery pack 20.

### Embodiment 2

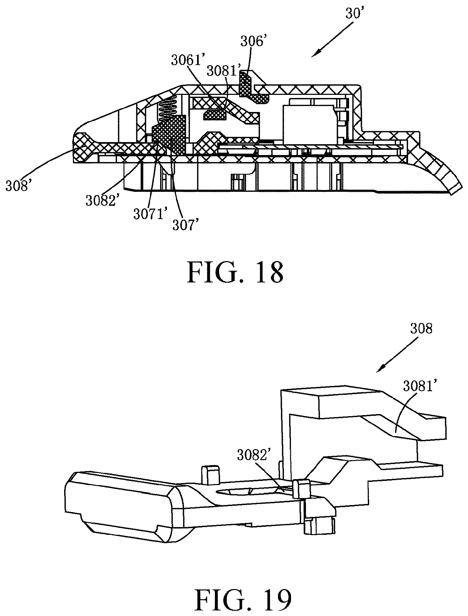

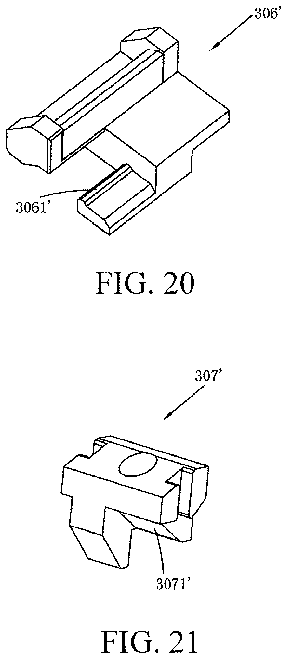

Embodiment 2 is a variant of Embodiment 1. Referring to FIG. 18 to FIG. 21, an electrical apparatus system includes an electrical apparatus 10, a battery pack 20, and an adapter 30'. The electrical apparatus 10 and the battery pack 20 have basically same structures as those in implementation 1. For convenience of description, structures in this embodiment that are the same as those in Embodiment 1 are denoted by same numbers and details are not described again, and different structures will be discussed in detail below.

In this embodiment, an operating portion 308' does not need to directly drive a first locking portion 306' through a connecting member. The operating portion 308' includes a first connecting surface 3081' provided above a finger touch portion 3080'. Correspondingly, a first locking portion 306' is provided with a first meshing surface 3061' that cooperates with the first connecting surface 3081'. Optionally, the first connecting surface 3081' is provided as a bevel, and the first meshing surface 3061' is provided as a curved surface. When the operating portion 308' moves in the first unlocking direction A1, the first connecting surface 3081' presses against the first meshing surface 3061', and the first meshing surface 3061' slides on the first connecting surface 3081', thereby driving the first locking portion 306'.

The operating portion 308' is further provided with a second connecting surface 3082'. Correspondingly, a second locking portion 307' is provided with a second meshing surface 3071' that cooperates with the second connecting surface 3082'. In this embodiment, the second connecting surface 3082' is provided as a curved surface, and the second meshing surface 3071' is configured as a bevel. When the operating portion 308' moves in the second unlocking direction A2, the second connecting surface 3082' presses against the second meshing surface 3071', and the second meshing surface 3071' slides on the second connecting surface 3082', thereby driving the second locking portion 307'.

### Embodiment 3

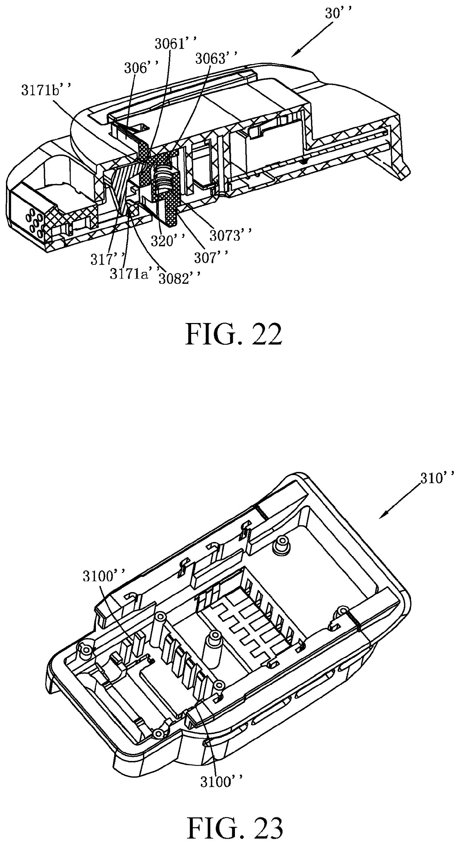

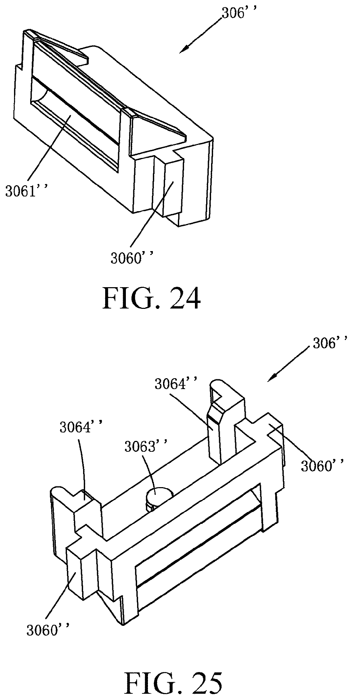

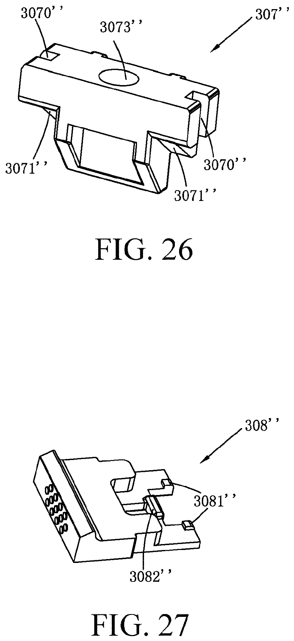

Embodiment 3 is another variant of Embodiment 1. Referring to FIG. 22 to FIG. 27, an electrical apparatus system includes an electrical apparatus 10, a battery pack 20, and an adapter 30". The electrical apparatus 10 and the battery pack 20 have basically same structures as those in implementation 1. For convenience of description, structures in this embodiment that are the same as those in Embodiment 1 are denoted by same numbers and details are not described again, and different structures will be discussed in detail below.

The first locking portion 306" and the second locking portion 307" are stacked in the first movement direction B1, and the reset portion 320" is arranged between the first locking portion 306" and the second locking portion 307". The first locking portion 306" is arranged above the second locking portion 307" in the first movement direction B1. One end of the reset portion 320" is sleeved on a convex column 3063" of the first locking portion 306", and an other end thereof extends into a groove 3073" of the second locking portion 307". The first locking portion 306" and the second locking portion 307" are stacked in the first movement direction B1, and share a same reset portion 320" to achieve resetting from an unlocking position to a locking position. The structure is compact and the size of the adapter is smaller.

In this embodiment, both a first abutting surface 3171a" and a first pressing surface 3082" are provided as curved surfaces, both a second abutting surface 3171b" and a second pressing surface 3061" are provided as curved surfaces, a third pressing surface 3081" is provided as a curved surface, and a third abutting surface 3071" is provided as a bevel.

In this embodiment, a first guide member 3060" is arranged as a protrusion respectively located on two sides of the first locking portion 306" and extending in the up-down direction. A first limiting member 3100" is arranged as a groove located on an upper housing 310" and matching the first guide member 3060". A second guide member 3070" is provided as a groove respectively located on two sides of the second locking member 307 and extending in the up-down direction. A second limiting member 3064" is arranged as a pair of protrusions located at the first locking portion 306" and matching the second guide member 3070.

### Embodiment 4

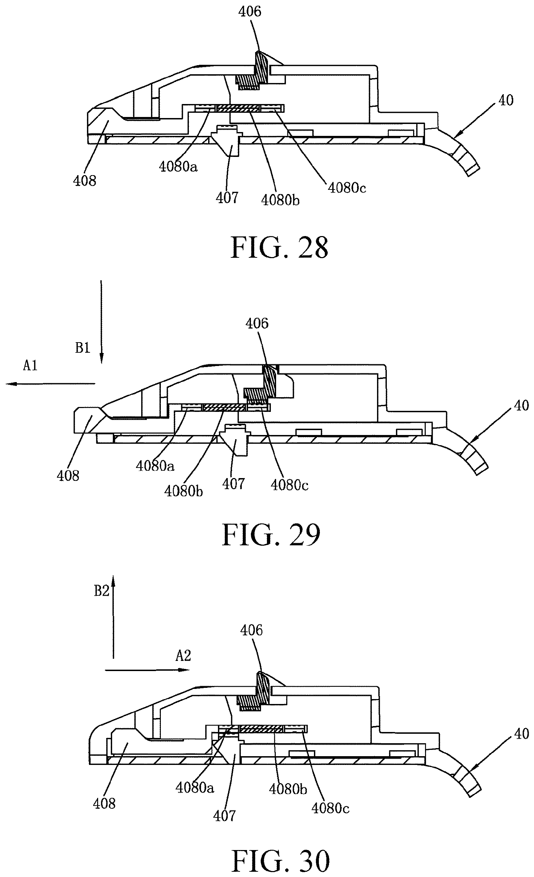

Referring to FIG. 28 to FIG. 31, an electrical apparatus system includes an electrical apparatus 10, a battery pack 20, and an adapter 40. The electrical apparatus 10 and the battery pack 20 have basically same structures as those in implementation 1. For convenience of description, structures in this embodiment that are the same as those in Embodiment 1 are denoted by same numbers and details are not described again, and different structures will be discussed in detail below.

A operating portion 408, a first locking portion 406, and a second locking portion 407 all have magnetic regions, and when the first locking portion 406 is located at the first locking position, a surface of the first locking portion 406 close to the operating portion 408 and a surface of the operating portion 408 close to the first locking portion 406 have a same magnetic pole; when the first locking portion 406 is located at the first unlocking position, the surface of the first locking portion 406 close to the operating portion 408 and the surface of the operating portion 408 close to the first locking portion 406 have opposite magnetic poles; when the second locking portion 407 is located at the second locking position, a surface of the second locking portion 407 close to the operating portion 408 and a surface of the operating portion 408 close to the second locking portion 407 have a same magnetic pole; and when the second locking portion 408 is located at the second unlocking position, the surface of the second locking portion 407 close to the operating portion 408 and the surface of the operating portion 408 close to the second locking portion 407 have opposite magnetic poles. Optionally, the operating portion 408, the first locking portion 406, and the second locking portion 407 are embedded with magnets.

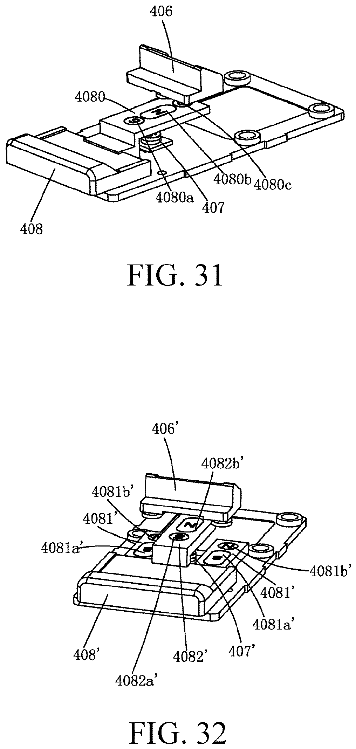

As shown in FIG. 31, an extension portion 4080 is arranged at an end of the operating portion 408 away from the finger touch portion. The extension portion 4080 is located at the end of the operating portion 408 away from the finger touch portion. The extension portion 4080 has at least three magnetic regions. In this embodiment, a first magnetic region 4080a, a second magnetic region 4080b, and a third magnetic region 4080c are sequentially arranged at the extension portion 4080 from front to back in the front-rear direction. Optionally, a magnetic pole of a surface of the first magnetic region 4080a close to the first locking portion 406 is set to an S pole, a magnetic pole of a surface of the second magnetic region 4080b close to the first locking portion 406 is set to an N pole, and a magnetic pole of a surface of the third magnetic region 4080c close to the first locking portion 406 is set to the S pole.

As shown in FIG. 28, in this case, the operating portion 408 is at the initial position, a projection region of a magnetic region of the first locking portion 406 at the operating portion 408 is located within the second magnetic region 4080b, and the magnetic pole of the surface of the second magnetic region 4080b close to the first locking portion 406 is the same as a magnetic pole of a surface of the first locking portion 406 close to the second magnetic region 4080b. The same magnetism causes the first locking portion 406 and the operating portion 408 to repel each other, so that the first locking portion 406 can be maintained at the first locking position without a reset portion. A projection region of a magnetic region of the second locking portion 407 at the operating portion 408 is located within the second magnetic region 4080b, and a magnetic pole of a surface of the second magnetic region 4080b close to the second locking portion 407 is the same as a magnetic pole of a surface of the second locking portion 407 close to the second magnetic region 4080b. The same magnetism causes the second locking portion 407 and the operating portion 408 to repel each other, so that the second locking portion 407 can be maintained at the second locking position without a reset portion.

When the operating portion 408 is moved in the first unlocking direction A1, as shown in FIG. 29, in this case, the operating portion 408 is located at the first release position, the projection region of the magnetic region of the first locking portion 406 at the operating portion 408 is located within the third magnetic region 4080c, and the magnetic pole of the surface of the third magnetic region 4080c close to the first locking portion 406 is opposite to a magnetic pole of a surface of the first locking portion 406 close to the third magnetic region 4080c. The opposite magnetic poles cause the first locking portion 406 and the operating portion 408 to attract each other, and due to the action of the first limiting mechanism, the first locking portion 406 moves from the first locking position to the first unlocking position in the first movement direction B1. In this case, the projection region of the magnetic region of the second locking portion 407 at the operating portion 408 is still located within the second magnetic region 4080b, and the second locking portion 407 is still located at the second locking position.

When the operating portion 408 is moved in the second unlocking direction A2, as shown in FIG. 30, in this case, the operating portion 408 is located at the second release position, the projection region of the magnetic region of the first locking portion 406 at the operating portion 408 is located within the second magnetic region 4080b, and the first locking portion 406 is located at the first locking position. The projection region of the magnetic region of the second locking portion 407 at the operating portion 408 is located within the first magnetic region 4080a, and a magnetic pole of a surface of the first magnetic region 4080a close to the second locking portion 407 is opposite to a magnetic pole of a surface of the second locking portion 407 close to the first magnetic region 4080a. The opposite magnetic poles cause the second locking portion 407 and the operating portion 408 to attract each other, and due to the action of the second limiting mechanism, the second locking portion 407 moves from the second locking position to the second unlocking position in the second movement direction B2.

In this embodiment, when the operating portion 408 is moved in a direction opposite to an unlocking direction, the first locking portion 406 and the second locking portion 407 can be reset due to the principle of magnets that like poles repel each other and opposite poles attract each other. The resetting of the operating portion 408 may alternatively be completed manually, and it is unnecessary to additionally arrange a reset portion to realize the resetting. The structure is simple and the operation is convenient.

### Embodiment 5

Embodiment 5 is a variant of Embodiment 4. Referring to FIG. 32 to FIG. 38, an electrical apparatus system includes an electrical apparatus 10, a battery pack 20, and an adapter 40'. The electrical apparatus 10 and the battery pack 20 have basically same structures as those in implementation 1. For convenience of description, structures in this embodiment that are the same as those in Embodiment 4 are denoted by same numbers and details are not described again, and different structures will be discussed in detail below.

As shown in FIG. 32, an extension portion is arranged at an end of the operating portion 408' away from the finger touch portion. The extension portion includes first extension portions 4081' and a second extension portion 4082'. A pair of first extension portions 4081' are respectively arranged on two sides of the extension portion, the second extension portion 4082' is arranged between the pair of first extension portions 4081', and the first extension portions 4081' are located above the second extension portion 4082' in the first movement direction B1. The first locking portion 406' has magnetism only in regions on two sides corresponding to the first extension portions 4081', and the second locking portion 407' has magnetism only in a region in the middle corresponding to the second extension portion 4082'.

The first extension portion 4081' and the second extension portion 4082' each have at least two magnetic regions. In this embodiment, a first magnetic region 4081a' and a second magnetic region 4081b' are sequentially arranged at the first extension portion 4081' from front to back in the front-rear direction, and a third magnetic region 4082a' and a fourth magnetic region 4082b' are sequentially arranged at the second extension portion 4082' from front to back in the front-rear direction. Optionally, a surface of the first magnetic region 4081a' close to the first locking portion 406' is set to an S pole, a surface of the second magnetic region 4081b' close to the first locking portion 406' is set to an N pole, a surface of the third magnetic region 4082a' close to the second locking portion 407' is set to the N pole, and a surface of the fourth magnetic region 4082b' close to the second locking portion 407' is set to the S pole.

By respectively arranging the first extension portions 4081' and the second extension portion 4082' at different heights, the arrangement space of the operating portion 408' can be saved, and the adapter 40' can be compact in size.

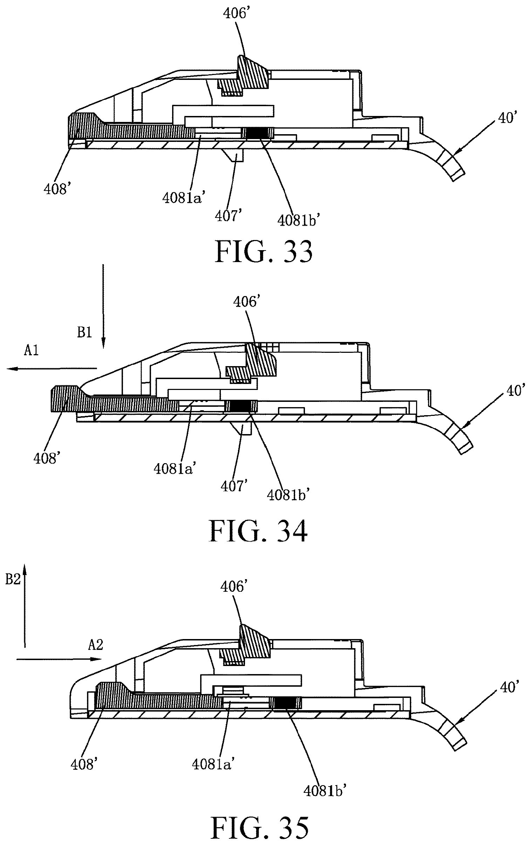

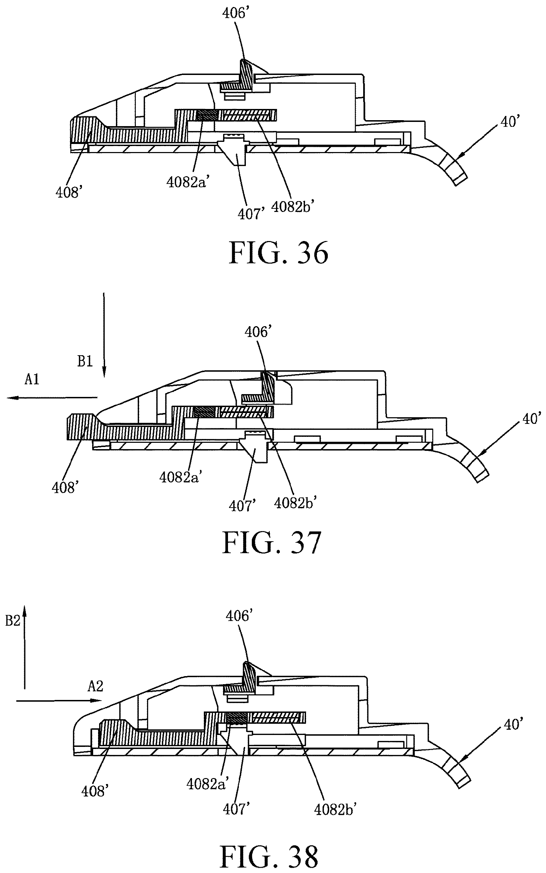

As shown in FIG. 33 and FIG. 36, in this case, the operating portion 408' is at the initial position, a projection of a magnetic region of the first locking portion 406' at the operating portion 408' is located within the first magnetic region 4081a', a projection of a magnetic region of the second locking portion 407' at the operating portion 408' is located within the fourth magnetic region 4082b', the magnetic pole of the surface of the first magnetic region 4081a' close to the first locking portion 406' is the same as a magnetic pole of a surface of the first locking portion 406' close to the first magnetic region 4081a', and the magnetic pole of the surface of the fourth magnetic region 4082b' close to the second locking portion 407' is the same as a magnetic pole of a surface of the second locking portion 407' close to the fourth magnetic region 4082b'. Therefore, the first locking portion 406' is located at the first locking position, and the second locking portion 407' is located at the second locking position.

When the operating portion 408' is moved in the first unlocking direction A1, as shown in FIG. 34 and FIG. 37, in this case, the operating portion 408' is located at the first release position, the projection of the magnetic region of the first locking portion 406' at the operating portion 408' is located within the second magnetic region 4081b', the projection of the magnetic region of the second locking portion 407' at the operating portion 408' is still located within the fourth magnetic region 4082b', the magnetic pole of the surface of the second magnetic region 4081b' close to the first locking portion 406' is opposite to a magnetic pole of a surface of the first locking portion 406' close to the second magnetic region 4081b'. Therefore, the first locking portion 406' moves from the first locking position to the first unlocking position in the first movement direction B 1, and the second locking portion 407' is still located at the second locking position.

When the operating portion 408' is moved in the second unlocking direction A2, as shown in FIG. 35 and FIG. 38, in this case, the operating portion 408' is located at the second release position, the projection of the magnetic region of the first locking portion 406' at the operating portion 408' is located within the first magnetic region 4081a', the projection of the magnetic region of the second locking portion 407' at the operating portion 408' is located within the third magnetic region 4082a', the magnetic pole of the surface of the third magnetic region 4082a' close to the second locking portion 407' is opposite to a magnetic pole of a surface of the second locking portion 407' close to the third magnetic region 4082a'. Therefore, the first locking portion 406' is located at the first locking position, and the second locking portion 407' moves from the second locking position to the second unlocking position in the second movement direction B2.

### Embodiment 6

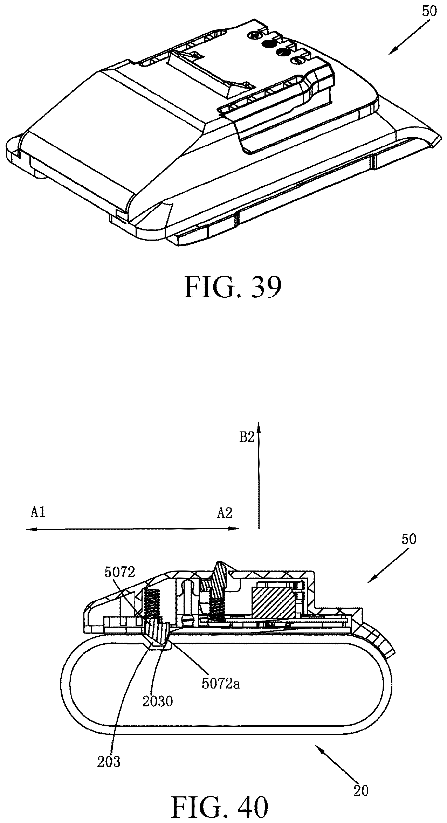

Referring to FIG. 39 to FIG. 42, an electrical apparatus system includes an electrical apparatus 10, a battery pack 20, and an adapter 50. The electrical apparatus 10 and the battery pack 20 have basically same structures as those in implementation 1. For convenience of description, structures in this embodiment that are the same as those in Embodiment 1 are denoted by same numbers and details are not described again, and different structures will be discussed in detail below.

In this embodiment, no operating portion is arranged on the adapter 50. A first locking portion 506 is driven by the electrical apparatus 10 or the adapter 50 to move from the first locking position to the first unlocking position, and a second locking portion 507 is driven by the battery pack 20 or the adapter 50 to move from the second locking position to the second unlocking position. The operating portion is replaced by an unlocking object, thereby simplifying the operation. In addition, the structure of the adapter 50 is simpler.

The process of unlocking the electrical apparatus 10 from the adapter 50 is similar to the process of unlocking the battery pack 20 from the adapter 50. A description is provided below by using the process of unlocking the battery pack 20 from the adapter 50 as an example.

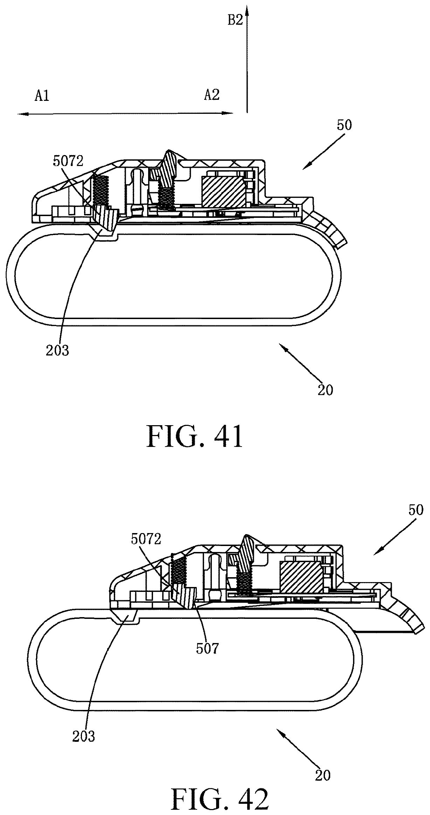

FIG. 40 shows a locked state of the adapter 50 and the battery pack 20. In this case, a second lock bolt 5072 cooperates with the battery pack locking portion 203, and a first coupling surface 5072a provided on the second lock bolt 5072 presses against a second coupling surface 2030 provided on the battery pack locking portion 203; and the battery pack 20 continues to be moved toward the front in the front-rear direction (that is, the first unlocking direction A1) or the adapter 50 continues to be moved toward the rear in the front-rear direction (that is, the second unlocking direction A2). As shown in FIG. 41, because the first coupling surface 5072a presses against the second coupling surface 2030 to generate a component force in the second movement direction B2, and due to the action of the second limiting mechanism, the second lock bolt 5072 moves in the second movement direction B2. As shown in FIG. 42, the second lock bolt 5072 has moved from the second locking position to the second unlocking position, and the adapter 50 is completely separated from the battery pack 20. Optionally, both the first coupling surface 5072a and the second coupling surface 2030 are provided as bevels.

The process of unlocking the electrical apparatus 10 from the adapter 50 is similar to the process of unlocking the battery pack 20 from the adapter 50, and details are not described herein again.

### Embodiment 7

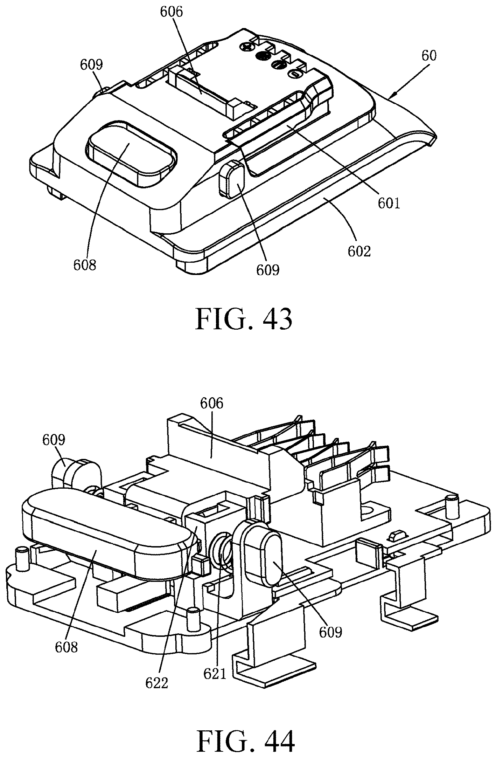

Referring to FIG. 43 to FIG. 50, an electrical apparatus system includes an electrical apparatus 10, a battery pack 20, and an adapter 60. The electrical apparatus 10 and the battery pack 20 have basically same structures as those in implementation 1. For convenience of description, structures in this embodiment that are the same as those in Embodiment 1 are denoted by same numbers and details are not described again, and different structures will be discussed in detail below.

The operating portion includes a first operating portion 608 configured to release locking between the adapter 60 and the electrical apparatus 10, and a second operating portion 609 configured to release locking between the adapter 60 and the battery pack 20. The first operating portion 608 moves in the third unlocking direction A3, to drive the first locking portion 606 to move from the first locking position to the first unlocking position in the third movement direction B3; and the second operating portion 609 moves in the fourth unlocking direction A4, to drive the second locking portion 607 to move from the second locking position to the second unlocking position in the fourth movement direction B4. In this embodiment, the third unlocking direction A3 is different from the fourth unlocking direction A4, and the third movement direction B3 is different from the fourth movement direction B4. The first operating portion 608 is arranged at an end of the housing in the front-rear direction. A pair of second operating portions 609 is arranged, which is respectively arranged on two sides of the housing in the left-right direction. Both the first operating portion 608 and the second operating portion 609 are arranged as buttons.

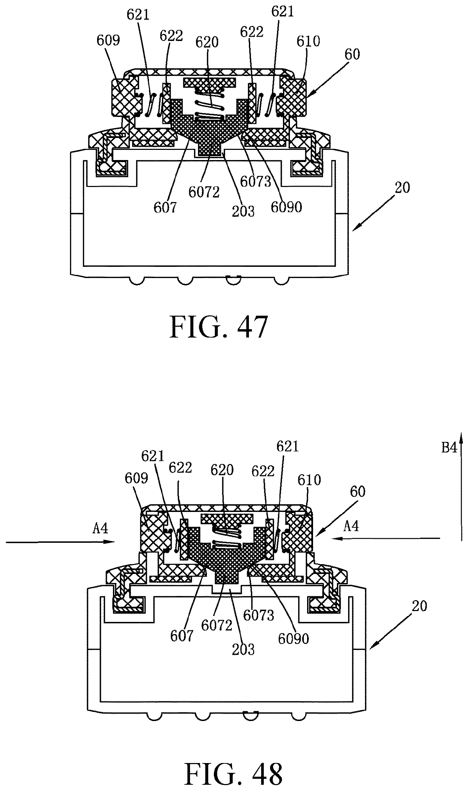

In this embodiment, the third unlocking direction A3 is perpendicular to the fourth unlocking direction A4, and the third movement direction B3 is opposite to the fourth movement direction B4. The third unlocking direction A3 is parallel to the third movement direction B3, and the fourth unlocking direction A4 is perpendicular to the fourth movement direction B4. The third unlocking direction A3, the fourth unlocking direction A4, the third movement direction B3, and the fourth movement direction B4 are all perpendicular to an adaptive connection direction (where the adaptive connection direction is the front-rear direction) in which the electrical apparatus 10 or the battery pack 20 is adaptively connected to the adapter 60. In this embodiment, the third unlocking direction A3 is set to the downward direction in the up-down direction, and the fourth unlocking direction A4 is set to the left-right direction. The fourth unlocking directions A4 of the pair of second operating portions 609 are opposite to each other, and are both from an outer side of the housing toward an inner side of the housing. When the adapter 60 is unlocked from the battery pack 20, a pair of second operating portions 609 needs to be operated simultaneously. As shown in FIG. 48, the fourth unlocking direction A4 of the second operating portion 609 on a left side is set to the rightward direction in the left-right direction, and the fourth unlocking direction A4 of the second operating portion 609 on a right side is set to the leftward direction in the left-right direction. The third movement direction B3 is set to the downward direction in the up-down direction, and the fourth movement direction B4 is set to the upward direction in the up-down direction.

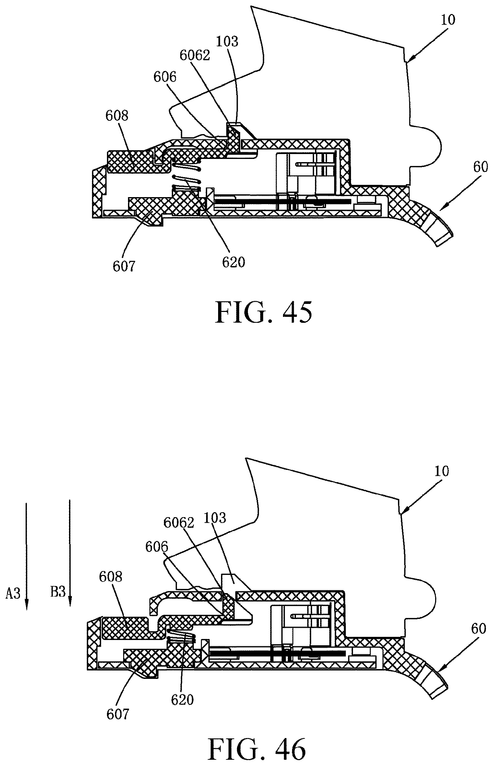

By arranging the first operating portion 608 and the second operating portion 609 respectively, the two operating portions realize unlocking of the electrical apparatus 10 and the battery pack 20 respectively, and the third unlocking direction A3 is perpendicular to the fourth unlocking direction A4, thereby properly utilizing the space of the adapter 60, realizing convenient operation, and conforming to ergonomics. As shown in FIG. 44 and FIG. 45, one end of a first reset portion 620 is sleeved on the first operating portion 608, and an other end thereof is sleeved on the second locking portion 607. A support portion 622 is arranged between a second reset portion 621 and the second operating portion 609. One end of the second reset portion 621 is sleeved on the second operating portion 609, and an other end thereof presses against the support member 622. Optionally, the first operating portion 608 and the first locking portion 606 are integrally arranged, and a pair of support portions 622 is arranged, which is arranged on the lower housing.

As shown in FIG. 47 and FIG. 48, the second operating portion 609 is provided with a first mating surface 6090 that cooperates with the second locking portion 607, and the second locking portion 607 is provided with a second mating surface 6073 that cooperates with the first mating surface 6090. Optionally, the first mating surface 6090 is provided as a curved surface, and the second mating surface 6073 is provided as a bevel.

The following describes the unlocking process of the electrical apparatus 10 and the adapter 60:
As shown in FIG. 45, the electrical apparatus 10 and the adapter 60 have been adaptively connected and locked. In this case, the first locking portion 606 is located at the first locking position, and the first lock bolt 6062 cooperates with the electrical apparatus locking portion 103. When the first operating portion 608 is moved in the third unlocking direction A3, as shown in FIG. 46, the first operating portion 608 compresses the first reset member 620, so that the first locking portion 606 moves from the first locking position to the first unlocking position in the third movement direction B3, and the first lock bolt 6062 is disengaged from the electrical apparatus locking portion 103. In this case, the adapter 60 is then moved toward the front in the front-rear direction or the electrical apparatus 10 is then moved toward the rear in the front-rear direction, so that a first guide rail 601 is disengaged from the electrical apparatus guide rail 101, and the adaptive connection between the electrical apparatus 10 and the adapter 60 can be released.

The following describes the adaptive connection and unlocking process of the battery pack 20 and the adapter 60.

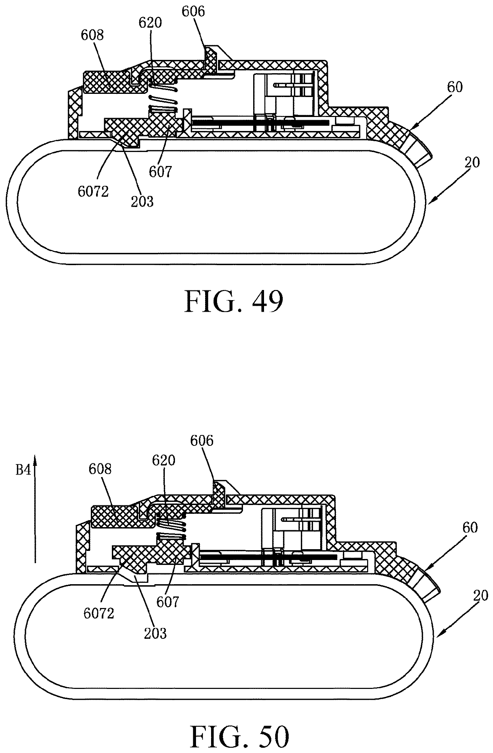

As shown in FIG. 47 and FIG. 49, the battery pack 20 and the adapter 60 have been adaptively connected and locked. In this case, the second locking portion 607 is located at the second locking position, and the second lock bolt 6072 cooperates with the battery pack locking portion 203. When the second operating portion 609 is moved in the fourth unlocking direction A4, as shown in FIG. 48 and FIG. 50, the second operating portion 609 compresses the second reset member 621, and the first coupling surface 6090 presses against the second coupling surface 6073, so that the second locking portion 607 moves from the second locking position to the second unlocking position in the fourth movement direction B4, and the second lock bolt 6072 is disengaged from the battery pack locking portion 203. In this case, the adapter 60 is then moved toward the rear in the front-rear direction or the battery pack 20 is then moved toward the front in the front-rear direction, so that a second guide rail 602 is disengaged from the battery pack guide rail 201, and the adaptive connection between the battery pack 20 and the adapter 60 can be released.

The adaptive connection process of the electrical apparatus 10 and the adapter 60 and the adaptive connection process of the battery pack 20 and the adapter 60 are similar to those in the foregoing implementations, and details are not described herein again.

### Embodiment 8

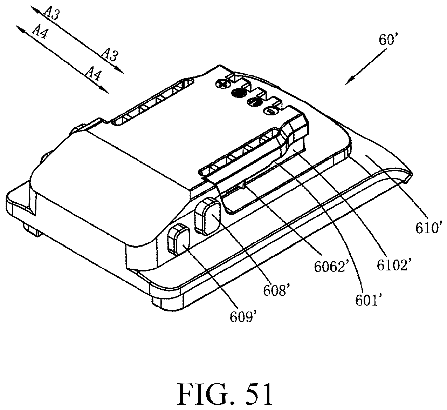

Embodiment 8 is a variant of Embodiment 7. Referring to FIG. 51 to FIG. 55, an electrical apparatus system includes an electrical apparatus 10, a battery pack 20, and an adapter 60'. The electrical apparatus 10 and the battery pack 20 have basically same structures as those in implementation 1. For convenience of description, structures in this embodiment that are the same as those in Embodiment 1 are denoted by same numbers and details are not described again, and different structures will be discussed in detail below.

In this embodiment, the third unlocking direction A3 is parallel to the fourth unlocking direction A4, and the third movement direction B3 is perpendicular to the fourth movement direction B4. The third unlocking direction A3 is parallel to the third movement direction B3, and the fourth unlocking direction A4 is perpendicular to the fourth movement direction B4. The third unlocking direction A3, the fourth unlocking direction A4, the third movement direction B3, and the fourth movement direction B4 are all perpendicular to the front-rear direction in which the electrical apparatus 10 or the battery pack 20 is adaptively connected to the adapter 60. The third unlocking direction A3 is parallel to the fourth unlocking direction A4, so that unlocking actions of the first operating portion 608' and the second operating portion 609' are the same, which helps a user to become familiar with the unlocking operation.

In this embodiment, the third unlocking direction A3 and the fourth unlocking direction A4 are set to the left-right direction. The first operating portion 608' includes a pair of buttons, which is respectively arranged on two sides of the housing in the left-right direction. The second operating portion 609' includes a pair of buttons, which is respectively arranged on two sides of the housing in the left-right direction. The first operating portion 608' and the second operating portion 609' are sequentially arranged in the front-rear direction. The unlocking direction of the first operating portion 608' or the second operating portion 609' located on the left side is set to the rightward direction in the left-right direction, and the unlocking direction of the first operating portion 608' or the second operating portion 609' located on the right side is set to the leftward direction in the left-right direction.

Further, the first locking portion 606' and the second locking portion 607' respectively run through mutually perpendicular surfaces of the housing. The housing includes a third surface 6102' and a fourth surface (not shown) that are perpendicular to each other. In this embodiment, the third surface 6102' is provided on a side wall of a first guide rail 601' of an upper housing 610', the first locking portion 606' runs through a groove provided on the side wall. The fourth surface is provided on a lower surface of the lower housing (not shown), and the second locking portion 607' runs through a groove provided on the lower housing. It should be noted that the third surface 6102' and the fourth surface may be completely or substantially perpendicular to each other.

A first lock bolt 6062' operatively extends or retracts from the groove provided on the side wall of the first guide rail 601', and the second locking portion 607' is arranged in the same manner as that in the foregoing embodiments, and operatively extends or retracts from the groove provided on the lower housing. When the first locking portion 606' is at the first locking position, the first lock bolt 6062' extends out from the groove provided on the side wall of the first guide rail 601'; and when the first locking portion 606' is at the first unlocking position, the first lock bolt 6062' retracts from the groove provided on the side wall of the first guide rail 601'. There is also a pair of first locking portions 606', which is respectively located on two sides of the housing in the left-right direction. The third movement direction B3 is set to the left-right direction. The third movement direction B3 of the first locking portion 606' located on the left side is set to the rightward direction in the left-right direction, and the third movement direction B3 of the first locking portion 606' located on the right side is set to the leftward direction in the left-right direction.

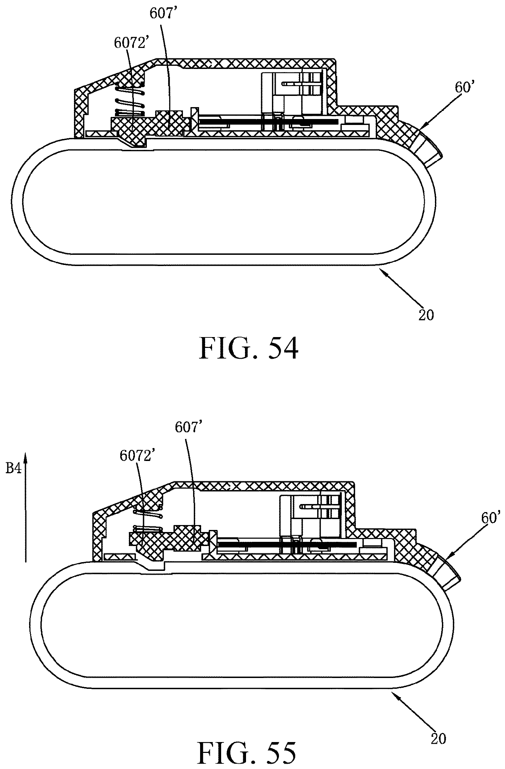

In this embodiment, as shown in FIG. 54 and FIG. 55, the movement process of the second locking portion is similar to that in Embodiment 7, and the fourth movement direction B4 is also set to the upward direction in the up-down direction. Details are not described herein again.

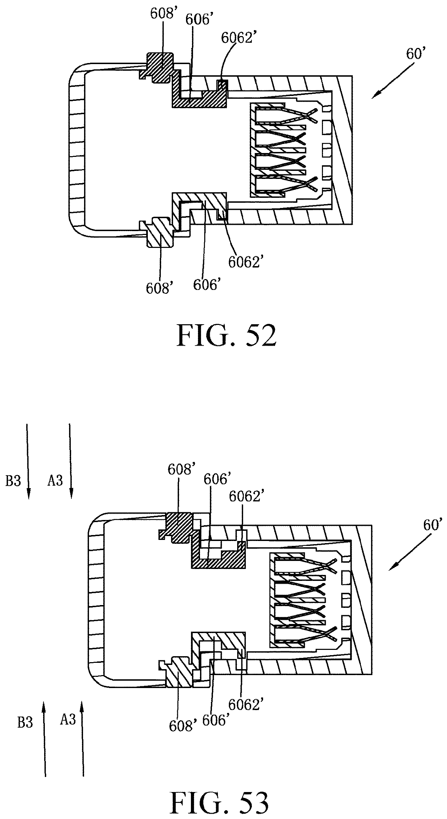

The following describes the unlocking process of the electrical apparatus 10 and the adapter 60':
As shown in FIG. 52, the electrical apparatus 10 and the adapter 60' have been adaptively connected and locked. In this case, the first locking portion 606' is located at the second locking position, and the first lock bolt 6062' cooperates with the electrical apparatus locking portion 103. When the first operating portion 608' is moved in the third unlocking direction A3, as shown in FIG. 53, the first operating portion 608' drives the first locking portion 606' to move from the first locking position to the first unlocking position in the fourth movement direction B4 (where the first reset member is not shown), and the first lock bolt 6062' is disengaged from the electrical apparatus locking portion 103. In this case, the adapter 60' is then moved toward the front in the front-rear direction or the electrical apparatus 10 is then moved toward the rear in the front-rear direction, so that the adaptive connection between the electrical apparatus 10 and the adapter 60' can be released.

The unlocking process of the battery pack 20 and the adapter 60' is similar to that in Embodiment 7, and details are not described herein again.

The present invention further provides an operating method for an electrical apparatus system 1. For specific compositions of the electrical apparatus system 1, reference may be made to Embodiment 1. The operating method includes the following steps:
driving, in a state in which the adapter 30 is adaptively connected and locked to the electrical apparatus 10, the operating portion 308 in a first operating manner to move the first locking portion 306 from the first locking position to the first unlocking position, so as to unlock the adapter 30 from the electrical apparatus 10; and
driving, in a state in which the adapter 30 is adaptively connected and locked to the battery pack 20, the operating portion 308 in a second operating manner to move the second locking portion 307 from the second locking position to the second unlocking position, so as to unlock the adapter 30 from the battery pack 20.

By setting arranging an operating portion 308 on the adapter 30, and unlocking the adapter 30 from the electrical apparatus 10 and unlocking the adapter 30 from the battery pack 20 in a first operating manner and a second operating manner respectively, the user can perform unlocking with a single hand, making the operation convenient.

It should be noted that there is no sequence between using the operating portion 308 to unlock the adapter 30 from the electrical apparatus 10 and to unlock the adapter 30 from the battery pack 20. The user may first unlock the adapter 30 from the electrical apparatus 10, or first unlock the adapter 30 from the battery pack 20. This is not limited in the present invention.

Further, referring to Embodiment 1, the first operating manner is set as moving in a first unlocking direction A1, the second operating manner is set as moving in a second unlocking direction A2, and the first unlocking direction A1is opposite to the second unlocking direction A2. In this way, the user can perform unlocking twice in opposite directions without changing operating habits, which conforms to ergonomics.

Further, referring to Embodiment 1, both the first unlocking direction A1 and the second unlocking direction A2 are parallel to a direction in which the electrical apparatus 10 or the battery pack 20 is adaptively connected to the adapter 30. Such an arrangement enables the unlocking direction of the operating portion 308 to correspond to a removal direction of an unlocked object, which conforms to ergonomics and facilitates operation.

In Embodiment 2, Embodiment 3, Embodiment 4, and Embodiment 5, unlocking manners of the operating portion are basically the same as that in Embodiment 1, and details are not described herein again.

The present invention further provides an operating method for an electrical apparatus system. For specific compositions of the electrical apparatus system, reference may be made to Embodiment 7. The operating method includes the following steps:
driving, in a state in which the adapter 60 is adaptively connected and locked to the electrical apparatus 10, the first operating portion 608 in a third operating manner to move the first locking portion 606 from the first locking position to the first unlocking position, so as to unlock the adapter 60 from the electrical apparatus 10; and
driving, in a state in which the adapter 60 is adaptively connected and locked to the battery pack 20, the second operating portion 609 in a fourth operating manner to move the second locking portion 607 from the second locking position to the second unlocking position, so as to unlock the adapter 60 from the battery pack 20. The user can operate the first operating portion 608 and the second operating portion 609 to respectively unlock the electrical apparatus and the battery pack. The unlocking processes will not interfere with each other, and the operation is convenient.

Further, referring to Embodiment 7, the third operating manner is set as moving in the third unlocking direction A3, the fourth operating manner is set as moving in the fourth unlocking direction A4, and the third unlocking direction A3 is perpendicular to the fourth unlocking direction A4.

Further, referring to Embodiment 7, both the third unlocking direction A3 and the fourth unlocking direction A4 are perpendicular to a direction in which the electrical apparatus 10 or the battery pack 20 is adaptively connected to the adapter 60. The third unlocking direction A3 is set to the downward direction in the up-down direction, and the fourth unlocking direction A4 is set to the left-right direction.

Further, referring to Embodiment 8, the third unlocking direction A3 is parallel to the fourth unlocking direction A4. In this way, the user operates the first operating portion 608' and the second operating portion 609' with the same unlocking actions, which helps the user to become familiar with the unlocking operation, and makes the operation convenient.

Further, referring to Embodiment 8, both the third unlocking direction A3 and the fourth unlocking direction A4 are perpendicular to a direction in which the electrical apparatus 10 or the battery pack 20 is adaptively connected to the adapter 60. In addition, both the third unlocking direction A3 and the fourth unlocking direction A4 are set to the left-right direction.

Various technical features in the foregoing embodiments may be combined randomly. For a concise description, possible combinations of various technical features in the foregoing embodiments are not all described. However, the combinations of the technical features are to be considered as falling within the scope recorded in this specification provided that the combinations of the technical features do not conflict with each other.

The foregoing embodiments only describe several implementations of the present invention, which are described specifically and in detail, but cannot be construed as a limitation to the patent scope of the present invention. It should be noted that a person of ordinary skill in the art may further make several variations and improvements without departing from the concept of the present invention, and these variations and improvements all fall within the protection scope of the present invention. Therefore, the protection scope of the patent of the present invention shall be subject to the appended claims.

## Claims

1. An adapter, configured to be adaptively connected to an electrical apparatus and a battery pack, **characterized in that**, the adapter comprising:
a housing;
a first locking portion and a second locking portion, the first locking portion is movable between a first locking position and a first unlocking position relative to the housing, when the first locking portion is located at the first locking position, the adapter is locked to the electrical apparatus, when the first locking portion is located at the first unlocking position, the adapter is unlocked from the electrical apparatus;
the second locking portion is movable between a second locking position and a second unlocking position relative to the housing, when the second locking portion is located at the second locking position, the adapter is locked to the battery pack, when the second locking portion is located at the second unlocking position, the adapter is unlocked from the battery pack.

2. The adapter according to claim 1, **characterized in that**, the first locking portion moves from the first locking position to the first unlocking position in a first movement direction, the second locking portion moves from the second locking position to the second unlocking position in a second movement direction, the first movement direction is opposite to the second movement direction.

3. The adapter according to claim 2, **characterized in that**, the first locking portion and the second locking portion respectively run through opposite surfaces of the housing.

4. The adapter according to claim 1, **characterized in that**, the first locking portion moves from the first locking position to the first unlocking position in a first movement direction, the second locking portion moves from the second locking position to the second unlocking position in a second movement direction, the first movement direction is perpendicular to the second movement direction.

5. The adapter according to claim 4, **characterized in that**, the first locking portion and the second locking portion respectively run through mutually perpendicular surfaces of the housing.

6. The adapter according to claim 1, **characterized in that**, the first locking portion and the second locking portion comprise protrusions, when the first locking portion is at the first locking position or the second locking portion is at the second locking position, the protrusion protrudes from a surface of the housing, so as to be locked to the electrical apparatus or the battery pack, when the first locking portion is at the first unlocking position or the second locking portion is at the second unlocking position, the protrusion retracts to the surface of the housing, so as to be separated from the electrical apparatus or the battery pack.

7. The adapter according to claim 1, **characterized in that**, the adapter further comprising an operating portion, the operating portion drives the first locking portion to move from the first locking position to the first unlocking position, the operating portion drives the second locking portion to move from the second locking position to the second unlocking position.

8. The adapter according to claim 7, **characterized in that**, the operating portion is capable of driving, in a first operating manner, the first locking portion to move from the first locking position to the first unlocking position; the operating portion is further capable of driving, in a second operating manner different from the first operating manner, the second locking portion to move from the second locking position to the second unlocking position.

9. The adapter according to claim 8, **characterized in that**, the operating portion moves in a first unlocking direction relative to the housing in the first operating manner, moves in a second unlocking direction relative to the housing in the second operating manner, the first unlocking direction is opposite to the second unlocking direction.

10. The adapter according to claim 8, **characterized in that**, an unlocking direction of the operating portion is parallel to a direction in which the electrical apparatus or the battery pack is adaptively connected to the adapter.

11. The adapter according to claim 7, **characterized in that**, an unlocking direction of the operating portion is perpendicular to a movement direction of the first locking portion and/or a movement direction of the second locking portion.

12. The adapter according to claim 7, **characterized in that**, the operating portion comprises a finger touch portion for a user to operate, the finger touch portion is arranged at an end of the housing in a direction in which the electrical apparatus or the battery pack is adaptively connected to the adapter.

13. The adapter according to claim 7, **characterized in that**, when the first locking portion is located at the first locking position and the second locking portion is located at the second locking position, the operating portion is located at an initial position, when the first locking portion is located at the first unlocking position, the operating portion is located at a first release position, when the second locking portion is located at the second unlocking position, the operating portion is located at a second release position, the operating portion is capable of being reset from the first release position or the second release position to the initial position in a direction opposite to an unlocking direction.

14. The adapter according to claim 13, **characterized in that**, the initial position is located between the first release position and the second release position.

15. The adapter according to claim 13, **characterized in that**, the first release position is at least partially outside an outer contour of the housing, the second release position is located inside the outer contour of the housing.

16. The adapter according to claim 7, **characterized in that**, the first locking portion moves from the first locking position to the first unlocking position in a first movement direction, the second locking portion moves from the second locking position to the second unlocking position in a second movement direction; the adapter further comprises a first limiting mechanism and a second limiting mechanism, the first limiting mechanism is configured to limit movement of the first locking portion in the first movement direction, the second limiting mechanism is configured to limit movement of the second locking portion in the second movement direction.

17. The adapter according to claim 16, **characterized in that**, the first limiting mechanism comprises a first limiting member arranged on the housing and a first guide member arranged at the first locking portion, the operating portion drives the first guide member to move relative to the first limiting member in the first movement direction; and/or the second limiting mechanism comprises a second limiting member arranged on the housing and a second guide member arranged at the second locking portion, the operating portion drives the second guide member to move relative to the second limiting member in the second movement direction.

18. The adapter according to claim 7, **characterized in that**, the operating portion, the first locking portion, and the second locking portion all have magnetic regions, when the first locking portion is located at the first locking position, a surface of the first locking portion close to the operating portion and a surface of the operating portion close to the first locking portion have a same magnetic pole; when the first locking portion is located at the first unlocking position, the surface of the first locking portion close to the operating portion and the surface of the operating portion close to the first locking portion have opposite magnetic poles; when the second locking portion is located at the second locking position, a surface of the second locking portion close to the operating portion and a surface of the operating portion close to the second locking portion have a same magnetic pole; when the second locking portion is located at the second unlocking position, the surface of the second locking portion close to the operating portion and the surface of the operating portion close to the second locking portion have opposite magnetic poles.

19. The adapter according to claim 7, **characterized in that**, the operating portion drives, through a connecting member, the first locking portion and/or the second locking portion to move, one end of the connecting member is pivotably connected relative to the operating portion, an other end of the connecting member is pivotably connected relative to the first locking portion and/or the second locking portion.

20. The adapter according to claim 7, **characterized in that**, the operating portion comprises a first operating portion configured to release locking between the adapter and the electrical apparatus, and a second operating portion configured to release locking between the adapter and the battery pack.

21. The adapter according to claim 20, **characterized in that**, the first operating portion is arranged at an end of the housing in a direction in which the electrical apparatus or the battery pack is adaptively connected to the adapter, the second operating portion is arranged on two sides of the housing perpendicular to the direction in which the electrical apparatus or the battery pack is adaptively connected to the adapter.

22. The adapter according to claim 21, **characterized in that**, the first operating portion moves in a third unlocking direction, to drive the first locking portion to move from the first locking position to the first unlocking position; the second operating portion moves in a fourth unlocking direction, to drive the second locking portion to move from the second locking position to the second unlocking position; the third unlocking direction is perpendicular to the fourth unlocking direction.

23. The adapter according to claim 20, **characterized in that**, both the first operating portion and the second operating portion are arranged on two sides of the housing perpendicular to a direction in which the electrical apparatus or the battery pack is adaptively connected to the adapter.

24. The adapter according to claim 23, **characterized in that**, the first operating portion moves in a third unlocking direction, to drive the first locking portion to move from the first locking position to the first unlocking position; the second operating portion moves in a fourth unlocking direction, to drive the second locking portion to move from the second locking position to the second unlocking position; the third unlocking direction is parallel to the fourth unlocking direction.

25. The adapter according to claim 1, **characterized in that**, the first locking portion is driven by the electrical apparatus or the adapter to move from the first locking position to the first unlocking position, the second locking portion is driven by the battery pack or the adapter to move from the second locking position to the second unlocking position.

26. The adapter according to claim 1, further comprising a reset portion, wherein the reset portion is configured to reset the first locking portion from the first unlocking position to the first locking position, and reset the second locking portion from the second unlocking position to the second locking position.

27. The adapter according to claim 26, **characterized in that**, the first locking portion and the second locking portion are stacked in the first movement direction, the reset portion is arranged between the first locking portion and the second locking portion.

28. The adapter according to claim 26, **characterized in that**, the reset portion comprises a first reset portion and a second reset portion, the first reset portion is configured to reset the first locking portion from the first unlocking position to the first locking position, the second reset portion is configured to reset the second locking portion from the second unlocking position to the second locking position.

29. An electrical apparatus system, **characterized in that**, comprising an electrical apparatus, a battery pack, and the adapter according to any one of claims 1 to 28.

30. The electrical apparatus system according to claim 29, **characterized in that**, the electrical apparatus comprises an electrical apparatus locking portion configured to be adaptively connected and locked to the first locking portion, the battery pack comprises a battery pack locking portion configured to be adaptively connected and locked to the second locking portion, both the electrical apparatus locking portion and the battery pack locking portion are provided as grooves.

31. An operating method for an electrical apparatus system, the electrical apparatus system comprises an adapter and an electrical apparatus and a battery pack that are capable of being respectively adaptively connected to the adapter, the adapter comprises a first locking portion, a second locking portion, and an operating portion, the first locking portion is capable of being driven by the operating portion to move between a first locking position at which the first locking portion is locked to the electrical apparatus and a first unlocking position at which the first locking portion is unlocked from the electrical apparatus, the second locking portion is capable of being driven by the operating portion to move between a second locking position at which the second locking portion is locked to the battery pack and a second unlocking position at which the second locking portion is unlocked from the battery pack, **characterized in that**,
the operating method comprises the following steps:
driving, in a state in which the adapter is adaptively connected and locked to the electrical apparatus, the operating portion in a first operating manner to move the first locking portion from the first locking position to the first unlocking position, so as to unlock the adapter from the electrical apparatus; and
driving, in a state in which the adapter is adaptively connected and locked to the battery pack, the operating portion in a second operating manner to move the second locking portion from the second locking position to the second unlocking position, so as to unlock the adapter from the battery pack.

32. The operating method according to claim 31, **characterized in that**, the first operating manner is set as moving in a first unlocking direction, the second operating manner is set as moving in a second unlocking direction, the first unlocking direction is opposite to the second unlocking direction.

33. The operating method according to claim 32, **characterized in that**, both the first unlocking direction and the second unlocking direction are parallel to a direction in which the electrical apparatus or the battery pack is adaptively connected to the adapter.
